# EUROPEAN PATENT APPLICATION

(11) **EP 4 415 305 A1**
(43) Date of publication of application: **14.08.2024**
(21) Application number: 21961831.1
(22) Date of filing: 28.10.2021
(51) Int. Cl.: H04L 9/08, H04W 4/40, H04L 9/32

(54) **KEY TRANSMISSION METHOD AND APPARATUS**

(71) Applicant: Huawei Technologies Co., Ltd., Shenzhen, Guangdong 518129 (CN)
(72) Inventor: PENG, Jianfen, Shenzhen, Guangdong 518129 (CN); WANG, Yong, Shenzhen, Guangdong 518129 (CN)
(74) Representative: Epping - Hermann - Fischer
(86) International application number: PCT/CN2021/127174
(87) International publication number: WO 2023/070465

(57) **Abstract**

Embodiments of this application disclose a key transmission method and apparatus. When a first condition is met, a first in-vehicle component sends a random number to a second in-vehicle component. The first condition includes restarting or waking up the first in-vehicle component. The first in-vehicle component encrypts the random number by using a first key stored in the first in-vehicle component, to obtain a first ciphertext. The first in-vehicle component receives a second ciphertext from the second in-vehicle component. The second ciphertext is associated with a second key stored in the second in-vehicle component and the random number. If the first ciphertext is different from the second ciphertext, the first in-vehicle component sends a third ciphertext to the second in-vehicle component. The third ciphertext includes information obtained by encrypting the first key by using a third key. When the first in-vehicle component is restarted or woken up, there is a high probability that the first in-vehicle component updates a key. Therefore, the foregoing method can resolve key inconsistency between different in-vehicle components and improve reliability of communication between the in-vehicle components.

## Description

### TECHNICAL FIELD

This application relates to the field of communication technologies, and in particular, to a key transmission method and apparatus.

### BACKGROUND

Data may be transmitted between different in-vehicle components of a vehicle to collaboratively complete a related service of the vehicle. For example, in an autonomous driving scenario, data containing geographical location information may be transmitted between different in-vehicle components of a vehicle to collaboratively complete a map-related service.

To ensure secure communication between different in-vehicle components, the in-vehicle components may encrypt or decrypt data by using a key. However, in actual application, key inconsistency exists between different in-vehicle components, resulting in low reliability of data transmission between the different in-vehicle components.

### SUMMARY

Embodiments of this application provide a key transmission method and apparatus to resolve key inconsistency between different in-vehicle components.

According to a first aspect, a key transmission method is provided. The method may be applied to a first in-vehicle component or a chip in the first in-vehicle component. For example, the method is applied to the first in-vehicle component. The method includes: When a first condition is met, the first in-vehicle component sends a random number to a second in-vehicle component. The first condition includes restarting or waking up the first in-vehicle component. The first in-vehicle component encrypts the random number by using a first key stored in the first in-vehicle component, to obtain a first ciphertext. The first in-vehicle component receives a second ciphertext from the second in-vehicle component. The second ciphertext is associated with a second key stored in the second in-vehicle component and the random number. If the first ciphertext is different from the second ciphertext, the first in-vehicle component sends a third ciphertext to the second in-vehicle component. The third ciphertext includes information obtained by encrypting the first key by using a third key. The first key is at least used to encrypt data containing geographical location information.

When the first in-vehicle component is restarted or woken up, there is a high probability that the first in-vehicle component updates a key. Therefore, through the foregoing method, when the second in-vehicle component stores a key, key inconsistency between the first in-vehicle component and the second in-vehicle component can be detected in time, and key synchronization between the first in-vehicle component and the first in-vehicle component can be implemented, to avoid that data transmission fails due to key inconsistency between different in-vehicle components. This can improve reliability of communication between the in-vehicle components. In a possible implementation, the first in-vehicle component is an in-vehicle computing platform or an in-vehicle component configured to communicate with an off-vehicle device, and the second in-vehicle component is a cockpit domain component, an autonomous driving domain component, or a chassis power domain component.

According to a second aspect, a key transmission method is provided. The method may be applied to a second in-vehicle component or a chip in the second in-vehicle component. For example, the method is applied to the second in-vehicle component. The method includes: The second in-vehicle component receives a random number from a first in-vehicle component. The second in-vehicle component sends a second ciphertext to the first in-vehicle component. The second ciphertext is associated with a second key stored in the second in-vehicle component and the random number. The second in-vehicle component receives a third ciphertext from the first in-vehicle component. The third ciphertext includes information obtained by encrypting a first key by using a third key. The first key is at least used to encrypt data containing geographical location information.

In a possible implementation, the first in-vehicle component is an in-vehicle computing platform or an in-vehicle component configured to communicate with an off-vehicle device, and the second in-vehicle component is a cockpit domain component, an autonomous driving domain component, or a chassis power domain component.

In a possible design, the method further includes: The first in-vehicle component encrypts the random number by using the second key, to generate the second ciphertext. In this way, the second ciphertext can be associated with the second key stored in the second in-vehicle component and the random number, so that the first in-vehicle component determines, based on the second ciphertext, whether the second key is consistent with the first key stored in the first in-vehicle component.

For beneficial effects of implementations of the second aspect, refer to beneficial effects of corresponding implementations of the first aspect. Details are not described herein again.

According to a third aspect, a key transmission method is provided. The method may be applied to a first in-vehicle component or a chip in the first in-vehicle component. For example, the method is applied to the first in-vehicle component. The method includes: When a second condition is met, the first in-vehicle component generates a third ciphertext. The first in-vehicle component sends the third ciphertext to a second in-vehicle component. The third ciphertext includes information obtained by encrypting a first key by using a third key. The first key is at least used to encrypt data containing geographical location information. The second condition includes one or more of restarting the first in-vehicle component, waking up the first in-vehicle component, updating a key by the first in-vehicle component, or receiving key request information from the second in-vehicle component by the first in-vehicle component. The key request information is used to request the first in-vehicle component to deliver a key (for example, the key request information is used to request to obtain the first key).

When the first in-vehicle component is restarted, the first in-vehicle component is woken up, the first in-vehicle component updates a key, or the like, there is a high probability that the first in-vehicle component updates a key. When the first in-vehicle component receives the key request information from the second in-vehicle component, there is a high probability that the second in-vehicle component does not have a key. Therefore, through the foregoing method, key synchronization between the first in-vehicle component and the first in-vehicle component can be implemented when the second in-vehicle component does not store a key, to avoid that data transmission fails due to key inconsistency between different in-vehicle components. This can improve reliability of communication between the in-vehicle components.

In a possible design, the first in-vehicle component is an in-vehicle computing platform or an in-vehicle component configured to communicate with an off-vehicle device, and the second in-vehicle component is a cockpit domain component, an autonomous driving domain component, or a chassis power domain component.

According to a fourth aspect, a key transmission method is provided. The method may be applied to a second in-vehicle component or a chip in the second in-vehicle component. For example, the method is applied to the second in-vehicle component. The method includes: When a third condition is met, the second in-vehicle component sends key request information to a first in-vehicle component. The key request information is used to request the first in-vehicle component to deliver a key (for example, the key request information is used to request to obtain a first key). The first key is at least used to encrypt data containing geographical location information. The third condition includes one or more of restarting the second in-vehicle component, waking up the second in-vehicle component, or not storing a key in the second in-vehicle component. The second in-vehicle component receives a third ciphertext from the first in-vehicle component. The third ciphertext includes information obtained by encrypting the first key by using a third key.

When the second in-vehicle component is restarted, the second in-vehicle component is woken up, or the second in-vehicle component does not store a key, there is a high probability that the second in-vehicle component does not have a key. Therefore, through the foregoing method, the second in-vehicle component can obtain a key from the second in-vehicle component in time, and key synchronization between the first in-vehicle component and the first in-vehicle component can be implemented when the second in-vehicle component does not store a key, to avoid that data transmission fails due to key inconsistency between different in-vehicle components. This can improve reliability of communication between the in-vehicle components.

In a possible design, the first in-vehicle component is an in-vehicle computing platform or an in-vehicle component configured to communicate with an off-vehicle device, and the second in-vehicle component is a cockpit domain component, an autonomous driving domain component, or a chassis power domain component.

According to a fifth aspect, a key transmission method is provided. The method may be applied to a first in-vehicle component or a chip in the first in-vehicle component. For example, the method is applied to the first in-vehicle component. The method includes: The first in-vehicle component generates a first public-private key pair. The first public-private key pair includes a first public key and a first private key. The first in-vehicle component sends first request information to a first server. The first request information is used to apply for a second certificate. The first request information includes the first public key and a first certificate. The first request information is signed by using the first certificate. The first certificate is at least used to prove that the first in-vehicle component is qualified to obtain data associated with geographical location information. The first in-vehicle component receives first response information from the first server. The first response information includes the second certificate. The second certificate includes the first public key. The second certificate is at least used by the first in-vehicle component to obtain a first key. The first key is at least used to encrypt data containing the geographical location information. In the foregoing method, the first in-vehicle component applies for the second certificate based on the first certificate, and accesses, based on the second certificate, a service provided by a second server (for example, obtains the first key from the second server). This can reduce a frequency of using the first certificate when the first in-vehicle component accesses the service provided by the second server, to reduce a risk that the first certificate is leaked or tampered with and improve security performance of the in-vehicle component.

In addition, in the foregoing method, a certificate (the second certificate) used for service registration is separated from a certificate (the first certificate) used for device validity verification. After the first in-vehicle component loses the original second certificate or the original second certificate is leaked or tampered with, the first in-vehicle component may update the second certificate based on the first certificate, to improve efficiency of obtaining a service by the first in-vehicle component from the second server.

In a possible design, the first in-vehicle component may send the first request information to the first server through the second server. Correspondingly, the first in-vehicle component may receive the first response information from the first server through the second server. The first server corresponds to a certificate provider. The second server corresponds to a map provider.

In this way, the first in-vehicle component can obtain the certificate from the certificate provider through the map provider. For example, when registering with the map provider to enable a map service, the first in-vehicle component obtains the certificate from the certificate provider through the map provider, so that a certificate application is triggered by the service, and a risk of certificate abuse is reduced. In addition, compared with that the first server receives request information from a plurality of in-vehicle components, that the first server uniformly receives request information from the second server can reduce a risk of communication congestion and improve communication reliability.

In a possible design, the first response information further includes a third certificate. The first response information is signed by using the third certificate. The method further includes: The first in-vehicle component verifies a signature of the first response information by using the third certificate. If the verification succeeds, the first in-vehicle component stores the second certificate; or if the verification fails, the first in-vehicle component discards the second certificate.

In this way, the first in-vehicle component stores the second certificate only when the second certificate is not tampered with (that is, the verification succeeds), so that certificate reliability can be improved.

In a possible design, the first in-vehicle component may further receive second response information from the first server. The second response information includes the first certificate and the third certificate. The second response information is signed by using the third certificate. The first in-vehicle component verifies a signature of the second response information by using the third certificate. If the verification succeeds, the first in-vehicle component stores the first certificate; or if the verification fails, the first in-vehicle component discards the first certificate. In this way, the first in-vehicle component can obtain the first certificate, to subsequently apply for the second certificate by using the first certificate.

According to a sixth aspect, a key transmission method is provided. The method may be applied to a first server or a chip in the first server. For example, the method is applied to the first server. The method includes: The first server receives first request information from a first in-vehicle component. The first request information is used to apply for a second certificate. The first request information includes a first public key and a first certificate. The first request information is signed by using the first certificate. The first certificate is at least used to prove that the first in-vehicle component is qualified to obtain data associated with geographical location information. The first server verifies a signature of the first request information by using the first certificate. If the verification succeeds, the first server sends first response information to the first in-vehicle component. The first response information includes the second certificate. The second certificate includes the first public key. The second certificate is at least used by the first in-vehicle component to obtain a first key. The first key is at least used to encrypt data containing the geographical location information.

In a possible design, the first server may receive the first request information from the first in-vehicle component through a second server. Correspondingly, the first server may send the first response information to the first in-vehicle component through the second server. The first server corresponds to a certificate provider. The second server corresponds to a map provider.

In a possible design, the first response information further includes a third certificate. The first server may further sign the first response information by using the third certificate.

In a possible design, the first server may further receive second request information from the second server. The second request information is used to apply for the first certificate. The second request information includes a second public key and a fourth certificate. The second request information is signed by using the fourth certificate. The fourth certificate is at least used to prove that the second server is qualified to provide the data associated with the geographical location information. The first server verifies a signature of the second request information by using the fourth certificate. If the verification succeeds, the first server sends second response information to the second server. The second response information includes the first certificate and the third certificate. The first certificate includes the second public key. The second response information is signed by using the third certificate. Alternatively, if the verification fails, the first server discards the second request information.

In this way, the second server (for example, the map provider) can apply for the first certificate for the first in-vehicle component. This can avoid that a public-private key pair generated by the first in-vehicle component is untrusted when the first in-vehicle component directly applies for the first certificate. In addition, when simultaneously serving a plurality of in-vehicle components (or a plurality of vehicles), the first server (for example, the certificate provider) may further simultaneously apply for certificates for the plurality of in-vehicle components (or the plurality of vehicles), to improve certificate application efficiency.

In a possible design, the first server may alternatively directly receive the second request information from the first in-vehicle component, and directly send the second response information to the first in-vehicle component. The second response information includes the first certificate and the third certificate. The first certificate includes the second public key. The second response information is signed by using the third certificate.

For beneficial effects of implementations of the sixth aspect, refer to beneficial effects of corresponding implementations of the fifth aspect. Details are not described herein again.

According to a seventh aspect, a key transmission method is provided. The method may be applied to a second server or a chip in the second server. For example, the method is applied to the second server. The method includes: The second server receives first request information from a first in-vehicle component. The first request information includes a first public key and a first certificate. The first request information is signed by using the first certificate. The first certificate is at least used to prove that the first in-vehicle component is qualified to obtain data associated with geographical location information. The second server verifies a signature of the first request information by using the first certificate. If the verification succeeds, the second server forwards the first request information to a first server. The second server receives first response information from the first server. The first response information includes a second certificate. The second certificate includes the first public key. The second certificate is at least used by the first in-vehicle component to obtain a first key. The first key is at least used to encrypt data containing the geographical location information. The second server sends the first response information to the first in-vehicle component. The first server corresponds to a certificate provider. The second server corresponds to a map provider.

In a possible design, the first response information may further include a third certificate. The first response information is signed by using the third certificate. The method further includes: The second server verifies a signature of the first response information by using the third certificate. If the verification succeeds, the second server sends the first response information to the first in-vehicle component; or if the verification fails, the second server discards the first response information.

In a possible design, the second server may further generate a second public-private key pair. The second public-private key pair includes a second public key and a second private key. The second server sends second request information to the first server. The second request information is used to apply for the first certificate. The second request information includes the second public key and a fourth certificate. The second request information is signed by using the fourth certificate. The fourth certificate is at least used to prove that the second server is qualified to provide the data associated with the geographical location information. The second server receives second response information from the first server. The second response information includes the first certificate and the third certificate. The first certificate includes the second public key. The second response information is signed by using the third certificate. The second server verifies a signature of the second response information by using the third certificate. If the verification succeeds, the second server sends the second response information to the first in-vehicle component; or if the verification fails, the second server discards the second response information. The first server corresponds to a certificate provider. The second server corresponds to a map provider.

In this way, the map provider can apply for the first certificate for the first in-vehicle component. This can avoid that a public-private key pair generated by the first in-vehicle component is untrusted when the first in-vehicle component directly applies for the first certificate. In addition, when simultaneously serving a plurality of in-vehicle components (or a plurality of vehicles), the first server may further simultaneously apply for certificates for the plurality of in-vehicle components (or the plurality of vehicles), to improve certificate application efficiency.

For beneficial effects of implementations of the seventh aspect, refer to beneficial effects of corresponding implementations of the fifth aspect. Details are not described herein again. According to an eighth aspect, a key transmission apparatus is provided. The apparatus includes modules/units/technical means configured to perform the method according to any one of the first aspect or the possible designs of the first aspect.

For example, the apparatus may include: a transceiver module, configured to send a random number to a second in-vehicle component when a first condition is met, where the first condition includes restarting or waking up a first in-vehicle component in which the apparatus is located; and a processing module, configured to encrypt the random number by using a first key stored in the first in-vehicle component, to obtain a first ciphertext. The transceiver unit is further configured to: receive a second ciphertext from the second in-vehicle component, where the second ciphertext is associated with a second key stored in the second in-vehicle component and the random number; and if the first ciphertext is different from the second ciphertext, send a third ciphertext to the second in-vehicle component, where the third ciphertext includes information obtained by encrypting the first key by using a third key, and the first key is at least used to encrypt data containing geographical location information.

In a possible implementation, the first in-vehicle component is an in-vehicle computing platform or an in-vehicle component configured to communicate with an off-vehicle device, and the second in-vehicle component is a cockpit domain component, an autonomous driving domain component, or a chassis power domain component.

According to a ninth aspect, a key transmission apparatus is provided. The apparatus includes modules/units/technical means configured to perform the method according to any one of the second aspect or the possible designs of the second aspect.

For example, the apparatus may include: a transceiver module, configured to receive a random number from a first in-vehicle component; send a second ciphertext to the first in-vehicle component, where the second ciphertext is associated with the random number and a second key stored in a second in-vehicle component in which the apparatus is located; and receive a third ciphertext from the first in-vehicle component, where the third ciphertext includes information obtained by encrypting a first key by using a third key, and the first key is at least used to encrypt data containing geographical location information.

In a possible design, the apparatus further includes a processing module, configured to encrypt the random number by using the second key, to generate the second ciphertext.

In a possible implementation, the first in-vehicle component is an in-vehicle computing platform or an in-vehicle component configured to communicate with an off-vehicle device, and the second in-vehicle component is a cockpit domain component, an autonomous driving domain component, or a chassis power domain component.

According to a tenth aspect, a key transmission apparatus is provided. The apparatus includes modules/units/technical means configured to perform the method according to any one of the third aspect or the possible designs of the third aspect.

For example, the apparatus may include: a processing module, configured to generate a third ciphertext when a second condition is met; and a transceiver module, configured to send the third ciphertext to a second in-vehicle component. The third ciphertext includes information obtained by encrypting a first key by using a third key. The first key is at least used to encrypt data containing geographical location information. The second condition includes one or more of restarting a first in-vehicle component in which the apparatus is located, waking up the first in-vehicle component, updating a key by the first in-vehicle component, or receiving key request information from the second in-vehicle component by the first in-vehicle component. The key request information is used to request the first in-vehicle component to deliver a key (for example, the key request information is used to request to obtain the first key).

In a possible design, the first in-vehicle component is an in-vehicle computing platform or an in-vehicle component configured to communicate with an off-vehicle device, and the second in-vehicle component is a cockpit domain component, an autonomous driving domain component, or a chassis power domain component.

According to an eleventh aspect, a key transmission apparatus is provided. The apparatus includes modules/units/technical means configured to perform the method according to any one of the fourth aspect or the possible designs of the fourth aspect.

For example, the apparatus may include a transceiver module, configured to: when a third condition is met, send key request information to a first in-vehicle component. The key request information is used to request the first in-vehicle component to deliver a key (for example, the key request information is used to request to obtain a first key). The first key is at least used to encrypt data containing geographical location information. The third condition includes one or more of restarting a second in-vehicle component in which the apparatus is located, waking up the second in-vehicle component, or not storing a key in the second in-vehicle component. The transceiver module is further configured to receive a third ciphertext from the first in-vehicle component. The third ciphertext includes information obtained by encrypting the first key by using a third key.

In a possible design, the first in-vehicle component is an in-vehicle computing platform or an in-vehicle component configured to communicate with an off-vehicle device, and the second in-vehicle component is a cockpit domain component, an autonomous driving domain component, or a chassis power domain component.

According to a twelfth aspect, a key transmission apparatus is provided. The apparatus includes modules/units/technical means configured to perform the method according to any one of the fifth aspect or the possible designs of the fifth aspect.

For example, the apparatus may include: a processing module, configured to generate a first public-private key pair, where the first public-private key pair includes a first public key and a first private key; and a transceiver module, configured to send first request information to a first server, where the first request information is used to apply for a second certificate, the first request information includes the first public key and a first certificate, the first request information is signed by using the first certificate, and the first certificate is at least used to prove that a first in-vehicle component in which the apparatus is located is qualified to obtain data associated with geographical location information; and receive first response information from the first server, where the first response information includes the second certificate, the second certificate includes the first public key, the second certificate is at least used by the first in-vehicle component to obtain a first key, and the first key is at least used to encrypt data containing the geographical location information.

In a possible design, the transceiver module is configured to: send the first request information to the first server through a second server; and receive the first response information from the first server through the second server. The first server corresponds to a certificate provider. The second server corresponds to a map provider.

In a possible design, the first response information further includes a third certificate. The first response information is signed by using the third certificate. The processing module is further configured to: verify a signature of the first response information by using the third certificate, and if the verification succeeds, store the second certificate; or if the verification fails, discard the second certificate.

In a possible design, the transceiver module is further configured to receive second response information from the first server. The second response information includes the first certificate and the third certificate. The second response information is signed by using the third certificate. The processing module is further configured to: verify a signature of the second response information by using the third certificate, and if the verification succeeds, store the first certificate; or if the verification fails, discard the first certificate.

According to a thirteenth aspect, a key transmission apparatus is provided. The apparatus includes modules/units/technical means configured to perform the method according to any one of the sixth aspect or the possible designs of the sixth aspect.

For example, the apparatus may include: a transceiver module, configured to receive first request information from a first in-vehicle component, where the first request information is used to apply for a second certificate, the first request information includes a first public key and a first certificate, the first request information is signed by using the first certificate, and the first certificate is at least used to prove that the first in-vehicle component is qualified to obtain data associated with geographical location information; and a processing module, configured to verify a signature of the first request information by using the first certificate. The transceiver module is further configured to: if the verification succeeds, send first response information to the first in-vehicle component, where the first response information includes the second certificate, the second certificate includes the first public key, the second certificate is at least used by the first in-vehicle component to obtain a first key, and the first key is at least used to encrypt data containing the geographical location information.

In a possible design, the transceiver module is configured to: receive the first request information from the first in-vehicle component through a second server; and send the first response information to the first in-vehicle component through the second server. The first server in which the apparatus is located corresponds to a certificate provider. The second server corresponds to a map provider.

In a possible design, the first response information further includes a third certificate. The processing module is further configured to sign the first response information by using the third certificate.

In a possible design, the transceiver module is further configured to receive second request information from the second server. The second request information is used to apply for the first certificate. The second request information includes a second public key and a fourth certificate. The second request information is signed by using the fourth certificate. The fourth certificate is at least used to prove that the second server is qualified to provide the data associated with the geographical location information. The processing module is further configured to verify a signature of the second request information by using the fourth certificate. The transceiver module is further configured to: if the verification succeeds, send second response information to the second server, where the second response information includes the first certificate and the third certificate, the first certificate includes the second public key, and the second response information is signed by using the third certificate; or if the verification fails, discard the second request information.

According to a fourteenth aspect, a key transmission apparatus is provided. The apparatus includes modules/units/technical means configured to perform the method according to any one of the seventh aspect or the possible designs of the seventh aspect.

For example, the apparatus may include: a transceiver module, configured to receive first request information from a first in-vehicle component, where the first request information includes a first public key and a first certificate, the first request information is signed by using the first certificate, and the first certificate is at least used to prove that the first in-vehicle component is qualified to obtain data associated with geographical location information; and a processing module, configured to verify a signature of the first request information by using the first certificate. The transceiver module is further configured to: if the verification succeeds, forward the first request information to a first server; receive first response information from the first server, where the first response information includes a second certificate, the second certificate includes the first public key, the second certificate is at least used by the first in-vehicle component to obtain a first key, and the first key is at least used to encrypt data containing the geographical location information; and send the first response information to the first in-vehicle component. The first server corresponds to a certificate provider. A second server in which the apparatus is located corresponds to a map provider.

In a possible design, the first response information further includes a third certificate. The first response information is signed by using the third certificate. The processing module is further configured to verify a signature of the first response information by using the third certificate. The transceiver module is further configured to send the first response information to the first in-vehicle component if the verification succeeds. The processing module is further configured to discard the first response information if the verification fails.

In a possible design, the processing module is further configured to generate a second public-private key pair. The second public-private key pair includes a second public key and a second private key. The transceiver module is further configured to send second request information to the first server, where the second request information is used to apply for the first certificate, the second request information includes the second public key and a fourth certificate, the second request information is signed by using the fourth certificate, and the fourth certificate is at least used to prove that the second server in which the apparatus is located is qualified to provide the data associated with the geographical location information; and receive second response information from the first server, where the second response information includes the first certificate and the third certificate, the first certificate includes the second public key, and the second response information is signed by using the third certificate. The processing module is further configured to verify a signature of the second response information by using the third certificate. The transceiver module is further configured to send the second response information to the first in-vehicle component if the verification succeeds. The processing module is further configured to discard the second response information if the verification fails.

According to a fifteenth aspect, a computer-readable storage medium is provided. The computer-readable storage medium is configured to store instructions. When the instructions are executed, the method according to any one of the first aspect or the possible designs of the first aspect, any one of the second aspect or the possible designs of the second aspect, any one of the third aspect or the possible designs of the third aspect, any one of the fourth aspect or the possible designs of the fourth aspect, any one of the fifth aspect or the possible designs of the fifth aspect, any one of the sixth aspect or the possible designs of the sixth aspect, or any one of the seventh aspect or the possible designs of the seventh aspect is implemented.

According to a sixteenth aspect, a key transmission apparatus is provided, including at least one processor and an interface circuit. The interface circuit is configured to receive code instructions and send the code instructions to the at least one processor. The at least one processor runs the code instructions to perform the method according to any one of the first aspect or the possible designs of the first aspect, any one of the second aspect or the possible designs of the second aspect, any one of the third aspect or the possible designs of the third aspect, any one of the fourth aspect or the possible designs of the fourth aspect, any one of the fifth aspect or the possible designs of the fifth aspect, any one of the sixth aspect or the possible designs of the sixth aspect, or any one of the seventh aspect or the possible designs of the seventh aspect.

According to a seventeenth aspect, a key transmission apparatus is provided, including at least one processor and at least one memory. The memory is configured to store computer-executable instructions. The processor is configured to execute the computer-executable instructions stored in the memory, to enable the apparatus to perform the method according to any one of the first aspect or the possible designs of the first aspect, any one of the second aspect or the possible designs of the second aspect, any one of the third aspect or the possible designs of the third aspect, any one of the fourth aspect or the possible designs of the fourth aspect, any one of the fifth aspect or the possible designs of the fifth aspect, any one of the sixth aspect or the possible designs of the sixth aspect, or any one of the seventh aspect or the possible designs of the seventh aspect.

According to an eighteenth aspect, a chip is provided. The chip is coupled to a memory, and is configured to read and execute program instructions stored in the memory, to implement the method according to any one of the first aspect or the possible designs of the first aspect, any one of the second aspect or the possible designs of the second aspect, any one of the third aspect or the possible designs of the third aspect, any one of the fourth aspect or the possible designs of the fourth aspect, any one of the fifth aspect or the possible designs of the fifth aspect, any one of the sixth aspect or the possible designs of the sixth aspect, or any one of the seventh aspect or the possible designs of the seventh aspect.

According to a nineteenth aspect, an in-vehicle terminal is provided, including the apparatus according to any one of the eighth aspect or the possible designs of the eighth aspect, any one of the ninth aspect or the possible designs of the ninth aspect, any one of the tenth aspect or the possible designs of the tenth aspect, any one of the eleventh aspect or the possible designs of the eleventh aspect, or any one of the twelfth aspect or the possible designs of the twelfth aspect. According to a twentieth aspect, a vehicle is provided. The vehicle includes the apparatus according to any one of the eighth aspect or the possible designs of the eighth aspect, any one of the ninth aspect or the possible designs of the ninth aspect, any one of the tenth aspect or the possible designs of the tenth aspect, any one of the eleventh aspect or the possible designs of the eleventh aspect, or any one of the twelfth aspect or the possible designs of the twelfth aspect. According to a twenty-first aspect, a server is provided. The server includes the apparatus according to any one of the thirteenth aspect or the possible designs of the thirteenth aspect. According to a twenty-second aspect, a server is provided. The server includes the apparatus according to any one of the fourteenth aspect or the possible designs of the fourteenth aspect.

### BRIEF DESCRIPTION OF DRAWINGS

FIG. 1 is a schematic diagram of a scenario to which an embodiment of this application is applicable;
FIG. 2 is a schematic diagram of a possible structure of a vehicle according to an embodiment of this application;
FIG. 3 is a flowchart of a key transmission method according to an embodiment of this application;
FIG. 4 is a schematic flowchart of obtaining a first key by a first in-vehicle component according to an embodiment of this application;
FIG. 5 is a schematic flowchart of installing a first certificate into a first in-vehicle component by a production line tool according to an embodiment of this application;
FIG. 6A and FIG. 6B are a schematic flowchart of applying for a first certificate online by a first in-vehicle component according to an embodiment of this application;
FIG. 7A and FIG. 7B are a schematic flowchart of applying for a first certificate for a first in-vehicle component online by a map provider according to an embodiment of this application;
FIG. 8 is a flowchart of another key transmission method according to an embodiment of this application;
FIG. 9 is a flowchart of another key transmission method according to an embodiment of this application;
FIG. 10 is a schematic diagram of a possible structure of a key transmission apparatus 100 according to an embodiment of this application;
FIG. 11 is a schematic diagram of a possible structure of another key transmission apparatus 110 according to an embodiment of this application; and
FIG. 12 is a schematic diagram of a possible structure of another key transmission apparatus 120 according to an embodiment of this application.

### DESCRIPTION OF EMBODIMENTS

The following describes in detail embodiments of this application with reference to the accompanying drawings.

Embodiments of this application provide a key transmission solution. The solution mainly implements the following two aspects: secure key delivery from a server to an in-vehicle component of a vehicle (involving key transmission from the server to the in-vehicle component) and key consistency between different in-vehicle components of the vehicle (involving key transmission between different in-vehicle components of the vehicle). It should be understood that the foregoing two aspects may be implemented separately or in combination with each other. This is not limited in this application. In the solution, a key that needs to be transmitted is at least used to encrypt data containing or related to geographical location information and transmitted between different in-vehicle components. For example, the data containing the geographical location information includes but is not limited to a latitude and longitude, an elevation (which is a height of a point above a reference plane), and a geographical track. For example, the data related to the geographical location information includes but is not limited to an image and a point cloud.

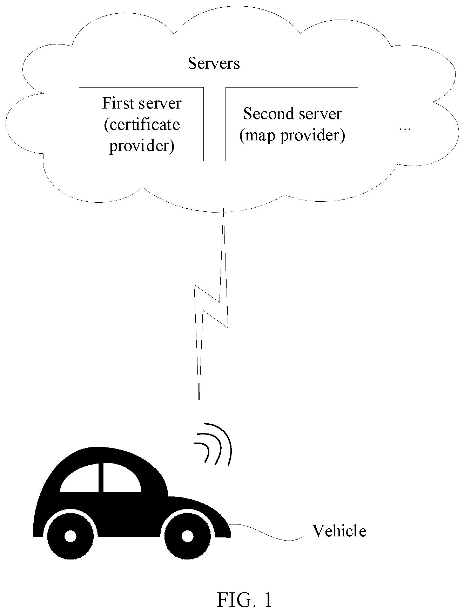

FIG. 1 is a schematic diagram of a scenario to which an embodiment of this application is applicable. A vehicle and a server are included in the scenario. There may be a plurality of servers. An example in which a first server and a second server are included is used in FIG. 1, which is not actually limited thereto.

The following describes some nouns or terms in embodiments of this application with reference to FIG. 1.
(1) Vehicle: is alternatively referred to as an automobile or a car. The vehicle in this specification may be an intelligent vehicle or a non-intelligent vehicle. This is not limited in embodiments of this application.
   It should be noted that an embodiment in which the vehicle is used as an example in embodiments of this application may be further applied to another type of terminal device, provided that the terminal device can perform, through an internal functional unit or apparatus of the terminal device, a related service process performed by the vehicle in embodiments of this application.
   The vehicle in embodiments of this application includes a plurality of in-vehicle components.
(2) In-vehicle component: is an electronic device that needs to encrypt and/or decrypt, by using a key, data containing or related to geographical location information in a vehicle or a component (for example, a chip or an integrated circuit) in the electronic device, or an electronic device that needs to send or receive a key in a vehicle or a component (for example, a chip or an integrated circuit) in the electronic device.

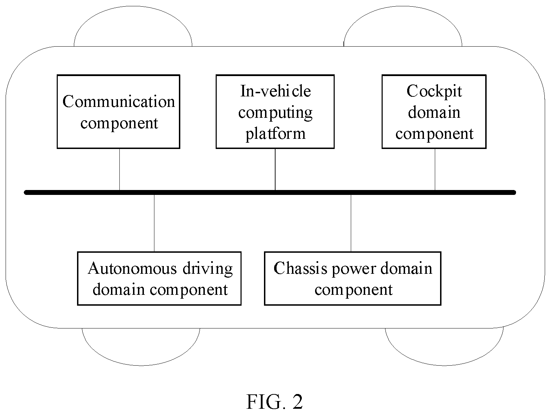

For example, FIG. 2 is a schematic diagram of a possible structure of a vehicle. The vehicle includes a plurality of in-vehicle components. The in-vehicle components may communicate with each other in a wired or wireless manner. For example, different in-vehicle components are connected and communicate with each other through a controller area network (Controller Area Network, CAN) bus.

The in-vehicle components are described as follows.
A. In-vehicle computing platform: is configured to provide various computing and control functions, for example, a computing and control function related to autonomous driving. A specific type of the in-vehicle computing platform is not limited in this application. In an example, the in-vehicle computing platform may be a mobile data center (Mobile Data Center, MDC). The MDC is a local computing platform of an autonomous vehicle. The MDC may run autonomous driving software, and may further run some simple operations, such as motor control.
B. Communication component: is configured to communicate with an off-vehicle device. A specific type of the communication component is not limited in this application. In an example, the communication component may be a telematics box (telematics box, T-Box), or referred to as a black box, which is mainly configured to provide information exchange between the vehicle and the Internet, and may be configured to provide functions such as positioning, communication, and diagnosis.
C. Cockpit domain component: is configured to provide functions related to an intelligent cockpit. In an example, the cockpit domain component may be an intelligent cockpit domain controller (Cockpit Domain Controller, CDC). The CDC is an electronic control unit (Electronic Control Unit, ECU) configured to control elements in the intelligent cockpit. The elements in the intelligent cockpit include but are not limited to an instrument panel, a central control panel (CCP for short), a head-up display, a microphone, a camera, a speaker (namely, loudspeaker), a Bluetooth module, and the like. The intelligent cockpit may control a running status and a running track of an autonomous vehicle through human-machine interaction based on a requirement of a passenger, so that both human-machine interaction and remote management in the intelligent cockpit can send a same command to control running of the vehicle.
D. Autonomous driving domain component: is configured to provide functions related to autonomous driving, for example, including but not limited to autonomous driving integrated positioning (Autonomous Driving Integrated Positioning, ADIP) and in-vehicle infotainment (In-vehicle Infotainment, IVI).
E. Chassis power domain component: is configured to provide functions related to chassis power. For example, the chassis power domain component includes but is not limited to a transmission control unit (Transmission Control Unit, TCU), a motor controller (Motor Control Unit, MCU), a vehicle control unit (Vehicle Control Unit, VCU), and a body control module (Body Control Module, BCM).

It should be understood that the foregoing several types of in-vehicle components are merely an example instead of a specific limitation. In some technical scenarios, a name of a device that has a similar key transmission function in a vehicle may not be referred to as a component. However, for ease of description, an electronic device that has a key transmission function in a vehicle is referred to as a component in embodiments of this application.

(3) Keys: include a symmetric key and an asymmetric key.

Symmetric key: A sender and a receiver use a same key to encrypt and decrypt a plaintext. The same key is a symmetric key. For example, in this specification, a key (for example, a first key) used to encrypt data containing geographical location information between different in-vehicle components is a symmetric key.

Asymmetric key: A sender and a receiver use a pair of keys to encrypt and decrypt data. One key is a public key and publicly released, and the other key is a private key and kept confidential by the user. When sending data, the sender may use the public key of the receiver to encrypt the data. After receiving a ciphertext, the receiver uses its own private key to decrypt the data. When sending data, the sender may use the private key of the sender to sign the data, and the receiver uses the public key of the sender to verify the signature. The private key and the public key are asymmetric keys. Generally, a pair of the public key and the private key may be referred to as a public-private key pair (or an asymmetric key pair). For example, in this specification, both a first public-private key pair used to apply for a second certificate and a second public-private key pair used to apply for a first certificate are asymmetric key pairs. Correspondingly, a first public key and a first private key included in the first public-private key pair are asymmetric keys, and a second public key and a second private key included in the second public-private key pair are asymmetric keys.

(5) Signature: is alternatively referred to as a digital signature or a public key digital signature, and is a digital string that can be generated only by a sender and cannot be forged by others. The digital string is also a valid proof of authenticity of information sent by the sender. The digital signature is similar to a physical signature written on paper, but is implemented based on a technology in the field of public key encryption and used to authenticate digital information.

Signature-related operations include signing and signature verification. For example, during signing, a sender uses a hash (hash) function to generate digest information for an original text to be transmitted, encrypts the digest information by using a private key of the sender, and transmits encrypted digest information together with the original text to a receiver. During signature verification, the receiver uses a public key of the sender to decrypt the encrypted digest information and uses the hash function to generate digest information for the received original text. If the generated digest information is the same as the decrypted digest information, received information is complete and is not modified during the transmission. If the generated digest information is different from the decrypted digest information, the information is modified. Therefore, the digital signature can verify information integrity. It can be learned from the foregoing descriptions that signing is an encryption process, and signature verification is a decryption process.

(6) Certificate: is alternatively referred to as a digital certificate or digital identifier, and is digital authentication that marks identity information of a communication party. A user may use a certificate to identify another user on a communication network. Each certificate corresponds to a public-private key pair. A certificate includes a public key, and may further include user information and the like. The digital certificate may be used to prove that a user listed in the certificate legally owns the public key in the certificate.

For example, in this specification, the first certificate corresponds to the second public-private key pair. The first certificate includes the second public key. The second certificate may prove that a user (for example, a first in-vehicle component) listed in the second certificate legally owns the second public key. The second certificate corresponds to the first public-private key pair. The second certificate includes the first public key. The second certificate may prove that a user (for example, the first in-vehicle component) listed in the second certificate legally owns the first public key.

It should be understood that in this specification, signing a plaintext by using a certificate means to sign the plaintext by using a private key corresponding to the certificate; and verifying a signature of a plaintext by using a certificate means to verify the signature of the plaintext by using a public key corresponding to the certificate. (5) Issuance: generally means certificate issuance. For example, a certificate issuer (namely, a certificate issuing authority, such as the Chinese Academy of Surveying and Mapping) uses its own private key to sign information such as a public key provided by a certificate requester, and generates a certificate requested by the certificate requester.

For example, Table 1 shows several possible certificates and related descriptions of the certificates.

**Table 1**

| Certificate | Description of use | Source description |
|---|---|---|
| Secondary root certificate for surveying and mapping | The certificate is at least used to prove validity of a map provider | The certificate may a certificate of the map provider issued by a certificate provider to the map provider |
| Production line certificate for surveying and mapping services | The certificate is at least used by public key infrastructure (Public Key Infrastructure, PKI) to issue a surveying and mapping plug-in certificate | The certificate may be a certificate of the PKI issued by the map provider to the PKI |
| Online certificate for surveying and mapping services | The certificate is at least used by the map provider to sign a digital envelope | The certificate may be a certificate of the map provider issued by the map provider itself |
| Surveying and mapping service certificate | The certificate is at least used by the certificate provider to issue a surveying and mapping registration certificate | The certificate may be a certificate of the certificate provider |
| Surveying and mapping plug-in certificate | The certificate is at least used to prove validity of an in-vehicle component to a cloud (for example, the map provider) | The certificate may be a certificate of the in-vehicle component issued by the PKI or the certificate provider to the in-vehicle component |
| Surveying and mapping registration certificate | The certificate is at least used to register and enable a service, including obtaining a data encryption key (for example, a key used to encrypt data containing geographical location information) from the cloud (for example, the map provider) | The certificate may be a certificate of the in-vehicle component issued by the certificate provider to the in-vehicle component |

(6) First server: is a server of the certificate provider (or certificate issuing authority). The server at least can issue a certificate to an in-vehicle component of a vehicle.

(7) Second server: is a server of the map provider. The server at least can provide a service related to geographical location information for a vehicle, for example, a map service or a surveying and mapping service. For example, the second server may deliver, to the vehicle, a key used to encrypt data containing the geographical location information.

It may be understood that the first server and the second server may be deployed on different devices or a same device. This is not limited in this application.

(8) Digital envelope: is a technology that comprehensively uses advantages of a symmetric encryption technology and an asymmetric encryption technology for secure information transmission.

Specifically, a sender encrypts information content by using a symmetric key to obtain an information ciphertext, and encrypts the symmetric key by using a public key of a receiver to obtain a key ciphertext, where the information ciphertext and the key ciphertext constitute a digital envelope; and then sends the key ciphertext and the information ciphertext (namely, the digital envelope) to the receiver. The receiver opens the digital envelope by using a private key to obtain the symmetric key, and then decrypts the information ciphertext by using the symmetric key.

It should be understood that the foregoing two servers are merely an example, and are not actually limited thereto.

It should be noted that a system architecture and a service scenario described in embodiments of this application are intended to describe the technical solutions provided in this application more clearly, and do not constitute a limitation on the technical solutions provided in this application. A person of ordinary skill in the art may know that with evolution of the system architecture and emergence of new service scenarios, the technical solutions provided in this application are also applicable to similar technical problems.

The following describes a solution in which a server delivers a key to an in-vehicle component.

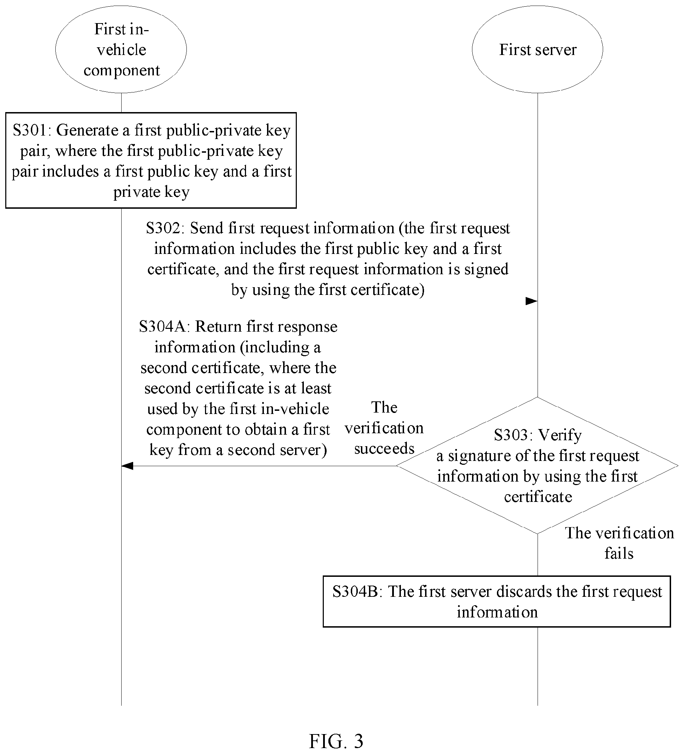

FIG. 3 shows a key transmission method according to an embodiment of this application. For example, the method is applied to the scenario shown in FIG. 1. The method includes the following steps.

S301: A first in-vehicle component generates a first public-private key pair. The first public-private key pair includes a first public key and a first private key.

The first in-vehicle component may be an in-vehicle computing platform. The in-vehicle computing platform can communicate with another in-vehicle component. For example, the first in-vehicle component is an MDC. The first in-vehicle component may alternatively be an in-vehicle component configured to communicate with an off-vehicle device, for example, a T-Box. Certainly, the first in-vehicle component may alternatively be another in-vehicle component that can communicate with a first server. This is not limited in this application.

S302: The first in-vehicle component sends first request information to the first server. Correspondingly, the first server receives the first request information from the first in-vehicle component. The first request information is used to apply to the first server for a second certificate. The first request information includes the first public key and a first certificate. The first request information is signed by using the first certificate.

Optionally, the first request information may further include an identifier of the first in-vehicle component.

The first certificate is used to prove validity of the first in-vehicle component, for example, is at least used to prove that the first in-vehicle component is qualified to obtain data associated with geographical location information or is at least used to prove that the first in-vehicle component is qualified to transmit a map service (or transmit data associated with a map service). The first in-vehicle component may sign the first request information by using the first certificate. For example, the first in-vehicle component calculates the first request information by using a hash function, to generate first digest information; encrypts the first digest information by using a second private key corresponding to the first certificate, to generate a ciphertext A; and sends the ciphertext A as a signature of the first request information and the first request information to the first server. For example, the first certificate may be the surveying and mapping plug-in certificate shown in Table 1.

Optionally, the first certificate may be issued to the first in-vehicle component after the first server verifies the validity of the first in-vehicle component, and is used to prove the validity of the first in-vehicle component.

The second certificate may be used by the first in-vehicle component to access a service provided by a second server, or used to prove that the first in-vehicle component is qualified to access the service provided by the second server. For example, the second certificate is at least used by the first in-vehicle component to obtain a first key from the second server, or the second certificate is at least used to prove that the first in-vehicle component is qualified to obtain the first key from the second server. The first key is at least used to encrypt data containing the geographical location information.

For example, the second certificate may be the surveying and mapping registration certificate shown in Table 1.

Optionally, the first in-vehicle component applies to the first server for the second certificate when registering and enabling a service related to the geographical location information on the second server, or the second certificate may be issued to the first in-vehicle component after the first server registers and enables the service related to the geographical location information for the first in-vehicle component. The second certificate may be used as a credential that the first in-vehicle component has registered and enabled the service related to the geographical location information. That is, the first in-vehicle component may access, by using the second certificate, the service related to the geographical location information provided by the second server. For example, the service includes obtaining the first key from the second server.

In this case, the first request information may be forwarded to the first server through the second server.

Example 1: The first in-vehicle component sends the first request information to the second server. After receiving the first request information, the second server directly forwards the first request information to the first server without verifying or processing the first request information.

Example 2: The first in-vehicle component sends the first request information to the second server. The second server verifies the signature of the first request information by using the first certificate (for example, the second server calculates the first request information by using the hash function, to generate second digest information; decrypts the signature by using a second public key corresponding to the first certificate, to obtain the first digest information; and compares the first digest information with the second digest information, and if the first digest information is the same as the second digest information, the verification succeeds, or if the first digest information is different from the second digest information, the verification fails). If the verification succeeds, the second server forwards the first request information to the first server.

Optionally, the second server may further sign the first request information by using its own certificate.

Example 3: The first in-vehicle component sends the first request information to the second server. After receiving the first request information, the second server transforms the first request information to obtain transformed first request information, and then forwards the transformed first request information to the first server. For example, data is transmitted between the first server and the second server based on a data transmission format corresponding to a first communication protocol. Data is transmitted between the first server and the second server based on a data transmission format corresponding to a second communication protocol. The first communication protocol is different from the second communication protocol. After receiving first request information in the data transmission format corresponding to the first communication protocol, the second server transforms the first request information to obtain first request information in the data transmission format corresponding to the second communication protocol, and then sends the first request information in the data transmission format corresponding to the second communication protocol to the first server. Example 4: The first in-vehicle component sends the first request information to the second server. After receiving the first request information, the second server verifies the signature of the first request information by using the first certificate. If the verification succeeds, the second server transforms the first request information to obtain transformed first request information, and then forwards the transformed first request information to the first server. It should be understood that the foregoing is merely examples rather than limitations. Certainly, there may be another specific forwarding manner.

S303: The first server verifies the signature of the first request information by using the first certificate. If the verification succeeds, perform S304A; or if the verification fails, perform S304B. For example, the first server calculates the first request information by using the hash function, to generate third digest information; decrypts the signature by using the second public key corresponding to the first certificate, to obtain the first digest information; and compares the first digest information with the third digest information. If the first digest information is the same as the third digest information, the verification succeeds; or if the first digest information is different from the third digest information, the verification fails.

S304A: The first server sends first response information to the first in-vehicle component.

Correspondingly, the first in-vehicle component receives the first response information from the first server. The first response information includes the second certificate.

Correspondingly, the first server may return the first response information to the first in-vehicle component through the second server (that is, the first server sends the first response information to the second server, and the second server forwards the first response information to the first in-vehicle component).

Example 1: The first server sends the first response information to the second server. After receiving the first response information, the second server directly forwards the first response information to the first in-vehicle component without verifying or processing the first response information.

Example 2: When returning the first response information, the first server may sign the first response information. For example, the first response information further includes a third certificate. The third certificate is a certificate owned by the first server. The first server signs the first response information by using the third certificate. Correspondingly, after receiving the first response information, the second server verifies a signature of the first response information by using the third certificate, and if the verification succeeds, sends the first response information to the first in-vehicle component; or if the verification fails, discards the first response information. Correspondingly, after receiving the first response information, the first in-vehicle component verifies, by using the third certificate, the signature added by the first server to the first response information, and if the verification succeeds, stores the second certificate (that is, considers that the second certificate is valid); or if the verification fails, discards the first response information (that is, discards the second certificate and considers that the second certificate is invalid).

For example, the third certificate may be the surveying and mapping service certificate shown in Table 1.

Optionally, the second server may further sign the first response information by using its own certificate. Correspondingly, after receiving the first response information, the first in-vehicle component may further verify, by using the certificate of the second server, a signature added by the second server to the first response information. If the verification on both the signature added by the first server and the signature added by the second server succeeds, the first in-vehicle component stores the second certificate (that is, considers that the second certificate is valid). Example 3: The first server sends the first response information to the second server. After receiving the first response information, the second server transforms the first response information, to obtain transformed first response information, and then forwards the transformed first response information to the first in-vehicle component. For example, data is transmitted between the first server and the second server based on the data transmission format corresponding to the first communication protocol. Data is transmitted between the first server and the second server based on the data transmission format corresponding to the second communication protocol. The first communication protocol is different from the second communication protocol. After receiving first response information in the data transmission format corresponding to the second communication protocol, the second server transforms the first response information to obtain first response information in the data transmission format corresponding to the first communication protocol, and then sends the first response information in the data transmission format corresponding to the first communication protocol to the first in-vehicle component.

Example 4: The first in-vehicle component sends the first request information to the second server. After receiving the first request information, the second server verifies the signature of the first request information by using the first certificate. If the verification succeeds, the second server transforms the first request information to obtain transformed first request information, and then forwards the transformed first request information to the first server.

It should be understood that the foregoing is merely examples rather than limitations. Certainly, there may be another specific forwarding manner.

S304B: The first server discards the first request information.

If the verification in S303 fails, the first server does not issue the second certificate, directly discards the first request information, and does not respond to the first request information. Optionally, if the verification in S303 fails, the first server may further return, to the first in-vehicle component, information indicating that the application for the second certificate fails, or the first server may return, to the first in-vehicle component through the second server, information indicating that the application for the second certificate fails.

It should be understood that in addition to performing the method shown in FIG. 3 when registering and enabling the service related to the geographical location information on the second server, the first in-vehicle component may further perform the method shown in FIG. 3 after the first in-vehicle component loses the original second certificate or the original second certificate is leaked or tampered with, to obtain an updated second certificate by using the first certificate.

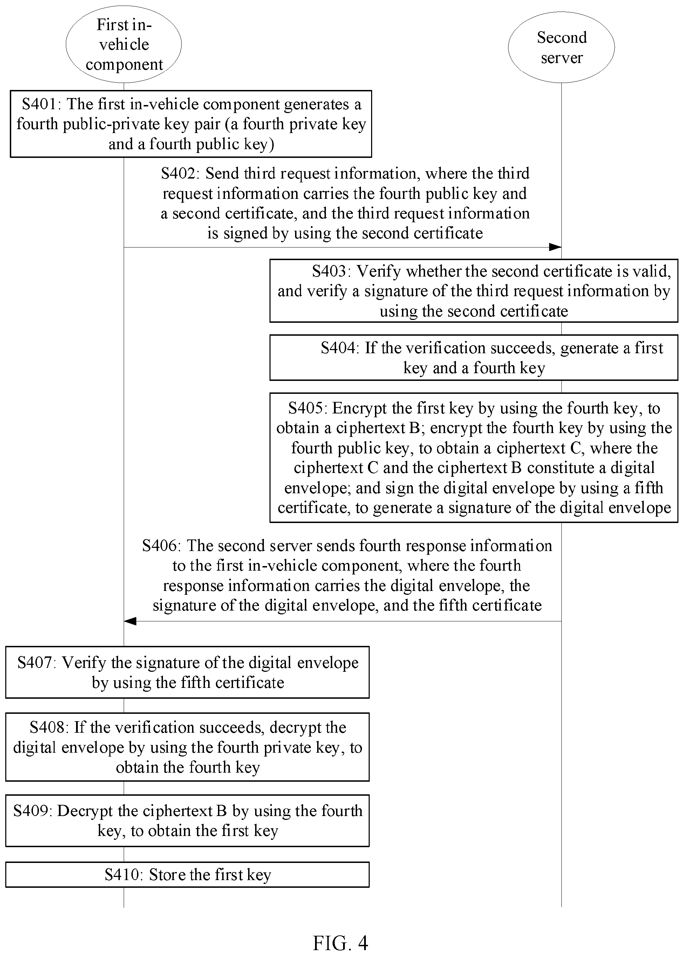

After obtaining the second certificate, the first in-vehicle component may obtain the first key from the second server by using the second certificate. For example, FIG. 4 is a schematic flowchart of obtaining the first key by the first in-vehicle component. The method includes the following steps. S401: The first in-vehicle component generates a fourth public-private key pair (a fourth private key and a fourth public key).

In an optional design, when the first in-vehicle component does not have a key used to encrypt the data containing the geographical location information, or an original key of the first in-vehicle component used to encrypt the data containing the geographical location information expires, the first in-vehicle component generates the fourth public-private key pair.

S402: The first in-vehicle component sends third request information to the second server. The third request information carries the fourth public key and the second certificate. The third request information is signed by using the second certificate. Correspondingly, the second server receives the third request information.

S403: The second server verifies whether the second certificate is valid, and verifies a signature of the third request information by using the second certificate.

For example, the second certificate includes indication information of a validity period. The second server verifies, based on the indication information, whether the first certificate is within the validity period. If no, it may be considered that the second certificate expires and is invalid.

For example, the first certificate carries a signature of a certificate provider. The second server verifies the signature by using a public key of the certificate provider. If the verification fails, it may be considered that the second certificate is not issued by the certificate provider and is invalid. For example, the first certificate carries information about a certificate issuer (for example, information about the certificate provider). The second server verifies whether the information about the certificate issuer is valid.

Certainly, the foregoing is merely examples rather than limitations.

On the contrary, if the second certificate meets conditions such as being within the validity period, being issued by the certificate provider, and being issued by a valid certificate issuer, it may be determined that the second certificate is valid.

S404: If the second server verifies that the second certificate is valid and the verification on the signature of the third request information succeeds, the second server generates the first key (content of the first key includes one or more of a key identifier, a validity period, and a key value) and a fourth key (the fourth key is a symmetric key).

S405: The second server encrypts the first key by using the fourth key, to obtain a ciphertext B; encrypts the fourth key by using the fourth public key, to obtain a ciphertext C, where the ciphertext C and the ciphertext B constitute a digital envelope; and signs the digital envelope by using a fifth certificate, to generate a signature of the digital envelope.

The fifth certificate is a certificate owned by the second server and used to sign the digital envelope. For example, the fifth certificate may be the online certificate for surveying and mapping services shown in Table 1.

S406: The second server sends fourth response information to the first in-vehicle component. The fourth response information carries the digital envelope, the signature of the digital envelope, and the fifth certificate. Correspondingly, the first in-vehicle component receives the fourth response information.

S407: The first in-vehicle component verifies the signature of the digital envelope by using the fifth certificate.

S408: If the verification on the signature of the digital envelope succeeds, the first in-vehicle component decrypts the digital envelope by using the fourth private key to obtain the fourth key. S409: The first in-vehicle component decrypts the ciphertext B by using the fourth key, to obtain the first key.

S410: The first in-vehicle component stores the first key.

Optionally, the first in-vehicle component may encrypt and store the first key by using a root key stored in the first in-vehicle component. The root key is used to encrypt the key in the first in-vehicle component used to encrypt the data containing the geographical location information.

It can be learned from the foregoing that in this embodiment of this application, device validity verification and service registration are separated (that is, the first certificate is used to prove the validity of the first in-vehicle component, and the second certificate is used by the first in-vehicle component to access the service provided by the second server), so that the first in-vehicle component applies for the second certificate based on the first certificate, and accesses, based on the second certificate, the service provided by the second server (for example, obtains the first key from the second server). This can reduce a frequency of using the first certificate when the first in-vehicle component accesses the service provided by the second server, to reduce a risk that the first certificate is leaked or tampered with and improve security performance of the in-vehicle component. Further, after the first in-vehicle component loses the original second certificate or the original second certificate is leaked or tampered with, the first in-vehicle component may further update the second certificate by using the first certificate, to further improve the security performance of the in-vehicle component.

To implement the method shown in FIG. 3, the first in-vehicle component needs to obtain the first certificate in advance. The following describes several methods for obtaining the first certificate by the first in-vehicle component.

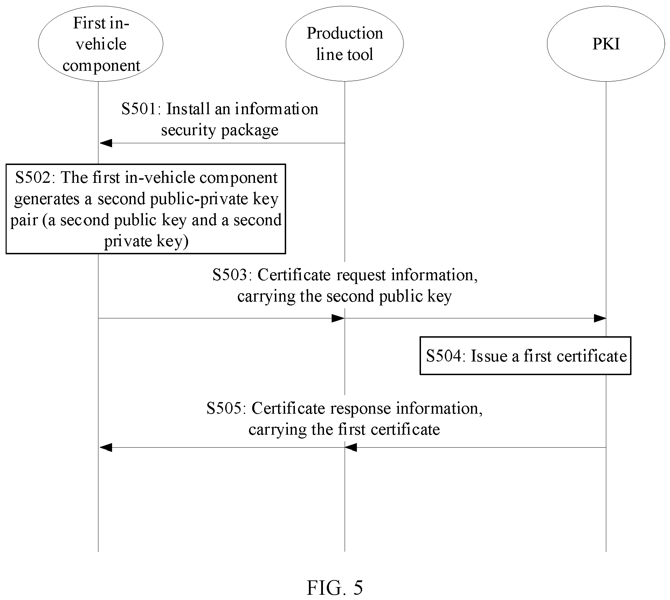

Method 1: A production line tool installs the first certificate into the first in-vehicle component. With reference to FIG. 5, the method includes the following steps.

S501: The production line tool installs an information security package into the first in-vehicle component.

The production line tool may be an execution management system deployed on a production line of in-vehicle components, and may be an electronic device or software running on the electronic device. This is not limited in this application. For example, the production line tool may be a manufacturing execution system (Manufacturing Execution System, MES). PKI is a system that is deployed on the production line of the in-vehicle components and manages public keys by using a digital certificate mechanism, and may be configured to issue certificates to the in-vehicle components. The PKI may be an electronic device or software integrated into the electronic device. This is not limited in this application.

The information security package includes a fourth certificate. The fourth certificate is used to prove the validity of the first in-vehicle component. For example, the fourth certificate may be the secondary root certificate for surveying and mapping shown in Table 1.

S502: The first in-vehicle component generates a second public-private key pair. The second public-private key pair includes the second public key and the second private key.

S503: The first in-vehicle component sends certificate request information to the PKI through the production line tool. The certificate request information carries the second public key. Optionally, the certificate request information further carries the identifier of the first in-vehicle component.

Optionally, the certificate request information is signed by using the fourth certificate.

S504: After receiving the certificate request information, the PKI issues the first certificate by using a sixth certificate.

The sixth certificate may be a certificate issued by a map provider to the PKI. The sixth certificate is used by the PKI to issue the certificate to the in-vehicle component. For example, the sixth certificate may be the production line certificate for surveying and mapping services shown in Table 1.

It should be understood that if the certificate request information is signed by using the fourth certificate, the PKI needs to issue the first certificate to the first in-vehicle component after verifying a signature of the fourth certificate.

S505: The PKI sends certificate response information to the in-vehicle component through the production line tool, and the production line tool installs the first certificate into the first in-vehicle component.

Through the foregoing method, the first certificate can be obtained on the production line. This method is applicable to a scenario in which the in-vehicle component cannot connect to an external network. The in-vehicle component can obtain the first certificate offline, and then apply for the second certificate based on the first certificate, to ensure data transmission efficiency.

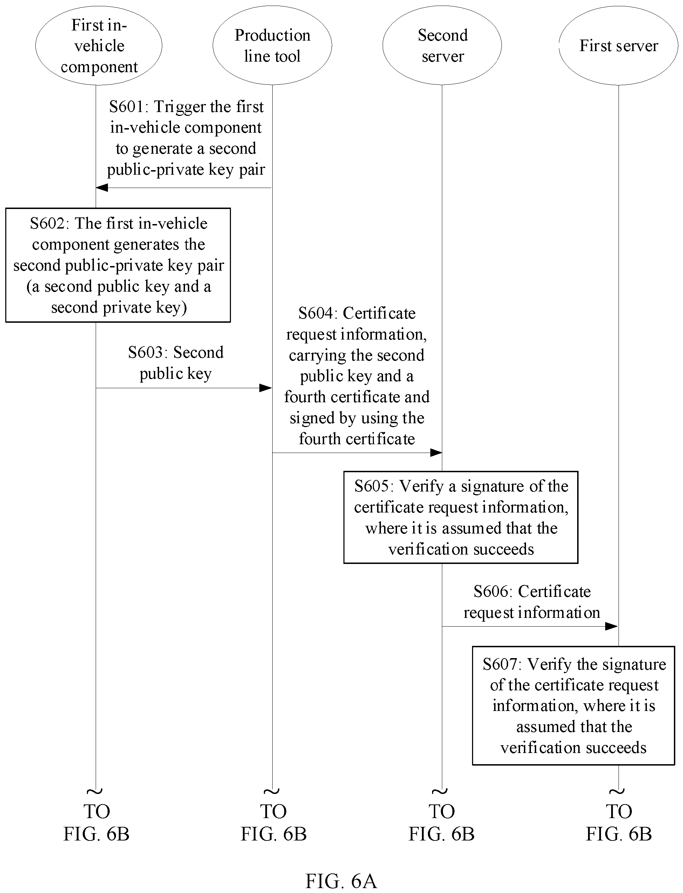

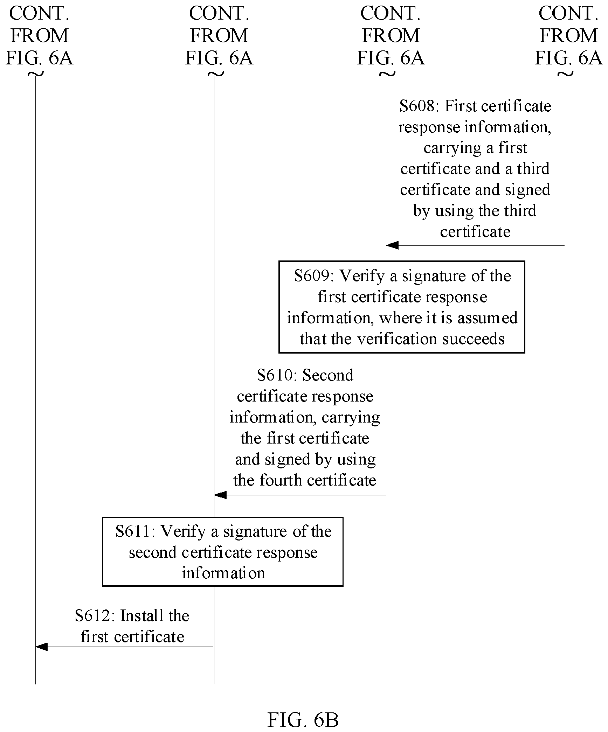

Method 2: The first in-vehicle component applies for the first certificate online. With reference to FIG. 6A and FIG. 6B, the method includes the following steps.

S601: The production line tool triggers the first in-vehicle component to generate a second public-private key pair.

S602: The first in-vehicle component generates the second public-private key pair. The second public-private key pair includes the second public key and the second private key.

S603: The first in-vehicle component sends the second public key to the production line tool. Optionally, the identifier of the first in-vehicle component is further sent.

S604: The production line tool sends certificate request information to the second server. The certificate request information carries the second public key and the fourth certificate, and is signed by using the fourth certificate.

S605: The second server verifies a signature of the certificate request information. If the verification fails, the certificate request information is discarded. If the verification succeeds, the next step is performed.

S606: The second server forwards the certificate request information to the first server.

S607: The first server verifies the signature of the certificate request information; and if the verification fails, discards the certificate request information. If the verification succeeds, the first server issues the first certificate by using the third certificate.

The third certificate is at least used by the first server to issue the first certificate.

S608: The first server sends first certificate response information to the second server. The first certificate response information carries the first certificate and the third certificate. The first certificate response information is signed by using the third certificate.

S609: The second server verifies a signature of the first certificate response information; and if the verification fails, discards the first certificate response information. If the verification succeeds, the next step is performed.

S610: The second server sends second certificate response information to the production line tool. The second certificate response information carries the first certificate. The second certificate response information is signed by using the fourth certificate.

S611: The production line tool verifies a signature of the second certificate response information; and if the verification fails, discards the second certificate response information. If the verification succeeds, the next step is performed.

S612: The production line tool installs the first certificate into the first in-vehicle component, and the first in-vehicle component stores the first certificate.

It should be understood that in the method shown in FIG. 6A and FIG. 6B, the production line tool may be optional. When there is no production line tool, the first in-vehicle component may directly interact with the second server.

Through the foregoing method, the first in-vehicle component can obtain the first certificate online. This method is applicable to a scenario in which the in-vehicle component can connect to an external network.

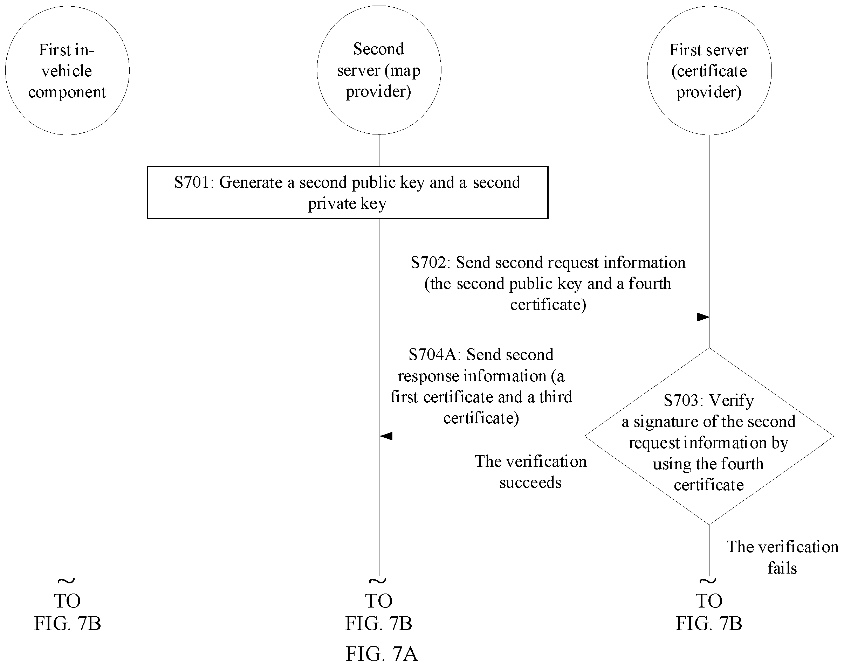

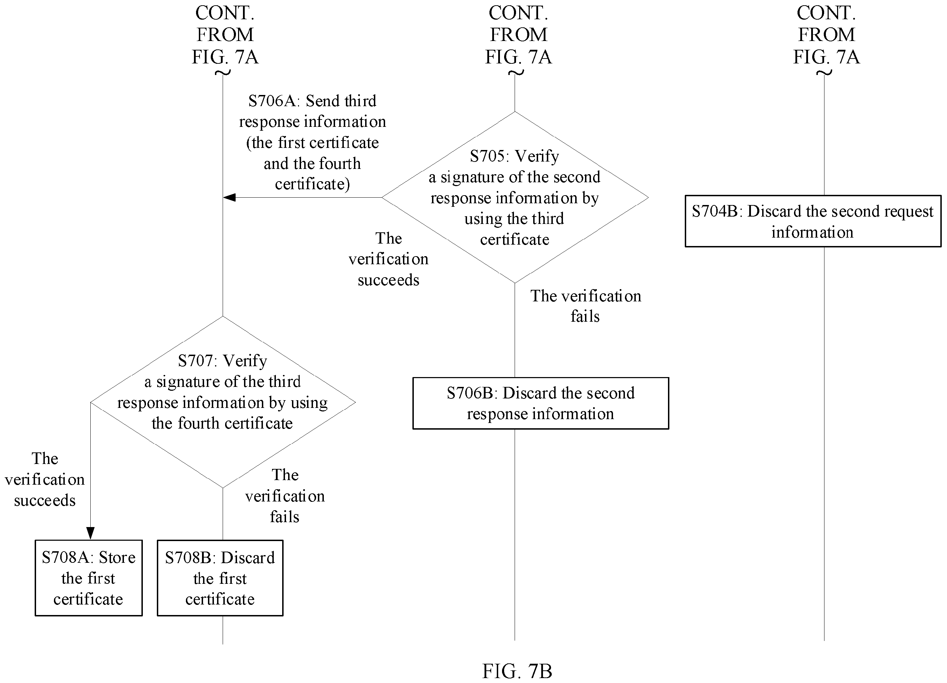

Method 3: A map provider applies for the first certificate online for the first in-vehicle component. As shown in FIG. 7A and FIG. 7B, the method includes the following steps.

S701: The second server generates a second public-private key pair. The second public-private key pair includes the second public key and the second private key.

S702: The second server sends second request information to the first server. The second request information is used to apply for the first certificate. The second request information includes the second public key and a fourth certificate. The second request information is signed by using the fourth certificate. The fourth certificate is used to prove validity of the second server, for example, is at least used to prove that the second server is qualified to provide the data associated with the geographical location information. Correspondingly, the first server receives the second request information from the second server.

For example, the fourth certificate may be the secondary root certificate for surveying and mapping shown in Table 1.

S703: The first server verifies a signature of the second request information by using the fourth certificate. If the verification succeeds, perform S704A; or if the verification fails, perform S704B. S704A: The first server sends second response information to the second server. The second response information includes the first certificate and the third certificate. The first certificate includes the second public key. The second response information is signed by using the third certificate. The third certificate is at least used by the first server to issue the first certificate. Correspondingly, the second server receives the second response information from the first server. S705: The second server verifies a signature of the second response information by using the third certificate. If the verification succeeds, perform S706A; or if the verification fails, perform S706B. S706A: The second server sends third response information to the first in-vehicle component. Correspondingly, the first in-vehicle component receives the third response information. The third response information includes the first certificate and the fourth certificate. The first certificate includes the second public key. The third response information is signed by using the fourth certificate.

S707: The first in-vehicle component verifies a signature of the third response information by using the fourth certificate. If the verification succeeds, perform S708A; or if the verification fails, perform S708B.

S708A: The first in-vehicle component stores the first certificate.

S704B: The first server discards the second request information.

S706B: The second server discards the second response information.

S708B: The first in-vehicle component discards the third response information (that is, discards the first certificate).

It should be understood that the foregoing process uses an example in which the first server delivers the first certificate to the first in-vehicle component through the second server and the second server further verifies and signs the second response information. Certainly, the second server may not verify or sign the second response information, or the second server may further transform the second response information (for example, perform format conversion based on different communication protocols). Alternatively, the first server may deliver the first certificate to the first in-vehicle component without through the second server (for example, the first server directly delivers the first certificate to the first in-vehicle component). A specific manner of delivering the first certificate is not limited in this application.

Through the foregoing method, the map provider applies for the first certificate online for the first in-vehicle component. This method is applicable to a scenario in which the first in-vehicle component can connect to an external network. The foregoing method can avoid that a public-private key pair generated by the first in-vehicle component is untrusted when the first in-vehicle component directly applies for the first certificate. In addition, when simultaneously serving a plurality of in-vehicle components (or a plurality of vehicles), the first server may further simultaneously apply for certificates for the plurality of in-vehicle components (or the plurality of vehicles), to improve certificate application efficiency.

It should be understood that the foregoing three methods are merely examples rather than limitations.

The following describes a solution for maintaining key consistency between different in-vehicle components of a vehicle.

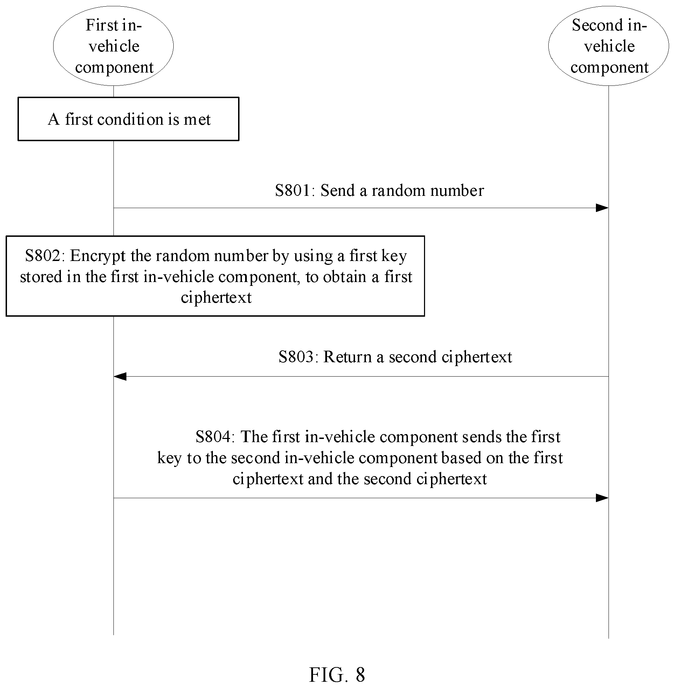

FIG. 8 is a flowchart of another key transmission method according to an embodiment of this application. For example, the method is applied to the vehicle shown in FIG. 2. In the method, it is assumed that both a first in-vehicle component and a second in-vehicle component have a function of storing a key at least used to encrypt data containing geographical location information (for ease of description, referred to as a key). For example, after the second in-vehicle component is shut down and restarted, a key used before the shutdown is still stored. The method includes the following steps.

S801: When a first condition is met, the first in-vehicle component sends a random number to the second in-vehicle component. Correspondingly, the second in-vehicle component receives the random number.

The first in-vehicle component may be an in-vehicle computing platform. The in-vehicle computing platform can communicate with another in-vehicle component. For example, the first in-vehicle component is an MDC. The first in-vehicle component may alternatively be an in-vehicle component configured to communicate with an off-vehicle device, for example, a T-Box. Certainly, the first in-vehicle component may alternatively be another in-vehicle component. This is not limited in this application. For ease of description, the following mainly uses an example in which the first in-vehicle component is the MDC.

The second in-vehicle component may be another component that communicates with the first in-vehicle component, for example, including but not limited to one or more of a cockpit domain component (for example, a CDC), an autonomous driving domain component (for example, ADIP and IVI), or a chassis power domain component (for example, a TCU, an MCU, a VCU, and a BCM). This is not limited in this application.

The first condition may be any condition that may cause inconsistency between a key stored in the first in-vehicle component and a key stored in the second in-vehicle component.

For example, when the following two scenarios occur, keys in different in-vehicle components are inconsistent.
1. The first in-vehicle component updates the key, but the key stored in the second in-vehicle component is the same as the key in the first in-vehicle component before the update. Consequently, the key stored in the first in-vehicle component is inconsistent with the key stored in the second in-vehicle component. In most cases, when the first in-vehicle component updates the key, the first in-vehicle component is restarted or woken up.
2. The keys in the first in-vehicle component and the second in-vehicle component of the vehicle are originally consistent. However, because a user replaces the second in-vehicle component with a new one, but the new second in-vehicle component does not have the key, the keys in the first in-vehicle component and the new second in-vehicle component are inconsistent. In most cases, when the second in-vehicle component (for example, ADIP) of the vehicle is replaced, the first in-vehicle component (for example, MDC) is restarted.

In view of this, the first condition may include but is not limited to restarting or waking up the first in-vehicle component.

S802: The first in-vehicle component encrypts the random number by using a first key stored in the first in-vehicle component, to obtain a first ciphertext.

The first key is stored in the first in-vehicle component and at least used to encrypt data containing geographical location information.

S803: The second in-vehicle component sends a second ciphertext to the first in-vehicle component. Correspondingly, the first in-vehicle component receives the second ciphertext from the second in-vehicle component.

The second ciphertext is associated with a second key stored in the second in-vehicle component and the random number. For example, the second in-vehicle component encrypts the random number by using the second key stored in the second in-vehicle component, to generate the second ciphertext. The second key is a key stored in the second in-vehicle component and at least used to encrypt the data containing the geographical location information.

S804: The first in-vehicle component sends the first key to the second in-vehicle component based on the first ciphertext and the second ciphertext. Correspondingly, the second in-vehicle component receives and stores the first key.

For example, the second in-vehicle component encrypts the random number by using the second key stored in the second in-vehicle component, to generate the second ciphertext. After receiving the second ciphertext, the first in-vehicle component may compare the first ciphertext with the second ciphertext. If the first ciphertext is different from the second ciphertext, the second key stored in the second in-vehicle component is different from the first key stored in the first in-vehicle component. Therefore, the first in-vehicle component delivers the first key to the second in-vehicle component, so that the second in-vehicle component stores the same key as the first in-vehicle component, to implement key consistency between the first in-vehicle component and the second in-vehicle component. If the first ciphertext is same as the second ciphertext, the second key stored in the second in-vehicle component is same as the first key stored in the first in-vehicle component. In this case, the first in-vehicle component may not send the first key.

Optionally, the first in-vehicle component may encrypt the first key and then send an encrypted first key to the second in-vehicle component. For example, the first in-vehicle component sends a third ciphertext to the second in-vehicle component. The third ciphertext includes information obtained by encrypting the first key by using a third key. In this way, security of key transmission can be improved.

Optionally, the second in-vehicle component further deletes the second key, to avoid that a plurality of keys conflict with each other in the first in-vehicle component.

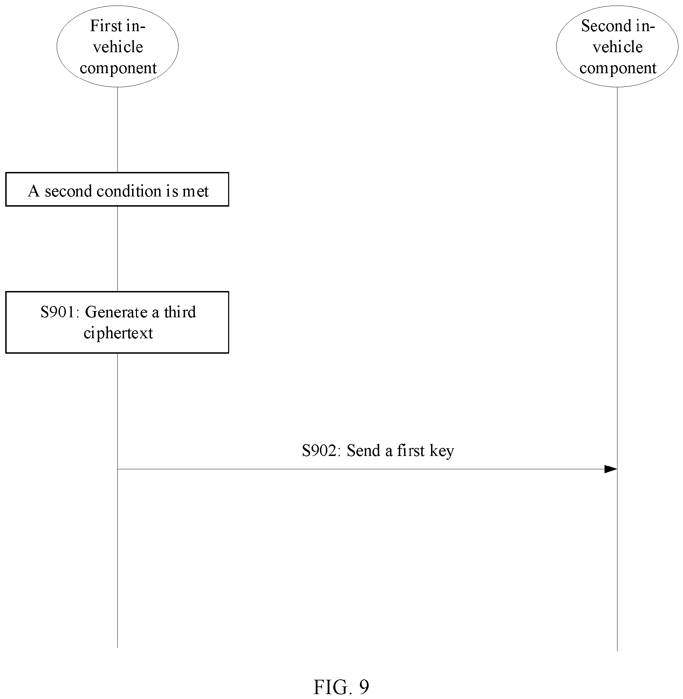

Through the foregoing method, key synchronization between the first in-vehicle component and the first in-vehicle component can be implemented when the second in-vehicle component stores a key, to avoid that data transmission fails due to key inconsistency between different in-vehicle components. This can improve reliability of communication between the in-vehicle components. FIG. 9 is a flowchart of another key transmission method according to an embodiment of this application. For example, the method is applied to the vehicle shown in FIG. 2. In the method, it is assumed that a first in-vehicle component has a function of storing a key at least used to encrypt data containing geographical location information (for ease of description, referred to as a key), and a second in-vehicle component does not have the function of storing a key. For example, after the second in-vehicle component is shut down and restarted, a key used before the shutdown is lost. The method includes the following steps.

S901: When a second condition is met, the first in-vehicle component generates a third ciphertext.

The third ciphertext includes information obtained by encrypting a first key by using a third key. The first key is at least used to encrypt the data containing the geographical location information. For the first in-vehicle component, refer to the foregoing related descriptions. Details are not described herein again.

The second condition may be any condition that causes inconsistency between a key stored in the first in-vehicle component and a key stored in the second in-vehicle component. It should be understood that, that the key in the second in-vehicle component is lost may be considered that the key stored in the first in-vehicle component is inconsistent with the key stored in the second in-vehicle component.

For example, the second condition includes one or more of restarting the first in-vehicle component, waking up the first in-vehicle component, or updating a key by the first in-vehicle component. This is because when the first in-vehicle component updates a key (for example, the first key is an updated key), the key stored in the first in-vehicle component is inconsistent with the key stored in the second in-vehicle component. When the first in-vehicle component is restarted or woken up, there is a high probability that the first in-vehicle component updates the key. Therefore, restarting or waking up the first in-vehicle component also causes inconsistency between the key stored in the first in-vehicle component and the key stored in the second in-vehicle component.

The second condition may further include receiving key request information from the second in-vehicle component by the first in-vehicle component. The key request information is used to request the first in-vehicle component to deliver a key. For example, the key request information is used to request to obtain the first key.

Optionally, when a third condition is met, the second in-vehicle component may send the key request information to the first in-vehicle component. The third condition includes one or more of restarting the second in-vehicle component, waking up the second in-vehicle component, or not storing a key in the second in-vehicle component. After the second in-vehicle component is restarted or the second in-vehicle component is woken up, the key in the second in-vehicle component is lost. Therefore, when the third condition is met, the second in-vehicle component may send the key request information to the first in-vehicle component.

For the second in-vehicle component, refer to the foregoing related descriptions. Details are not described herein again.

S902: The first in-vehicle component sends the first key to the second in-vehicle component. Correspondingly, the second in-vehicle component receives the first key from the first in-vehicle component.

Optionally, the first in-vehicle component may encrypt the first key and then send an encrypted first key to the second in-vehicle component. For example, the first in-vehicle component sends the third ciphertext to the second in-vehicle component. The third ciphertext includes the information obtained by encrypting the first key by using the third key. Correspondingly, the second in-vehicle component receives the third ciphertext from the first in-vehicle component, and obtains the first key after decrypting the third ciphertext by using the third key.

Through the foregoing method, key synchronization between the first in-vehicle component and the first in-vehicle component can be implemented when the second in-vehicle component does not store a key, to avoid that data transmission fails due to key inconsistency between different in-vehicle components. This can improve reliability of communication between the in-vehicle components.

It should be understood that the foregoing embodiments may be combined with each other to achieve different technical effects.

The foregoing describes the methods provided in embodiments of this application with reference to the accompanying drawings. The following describes apparatuses provided in embodiments of this application with reference to the accompanying drawings.

It may be understood that to implement the functions in the foregoing embodiments, the first server, the second server, the first in-vehicle component, the second in-vehicle component, and the like include corresponding hardware structures and/or software modules for performing the functions. A person skilled in the art should be easily aware that in combination with the units, modules, and method steps in the examples described in embodiments disclosed in this application, this application can be implemented through hardware or a combination of hardware and computer software. Whether a function is performed through hardware or hardware driven by computer software depends on particular application scenarios and design constraint conditions of the technical solutions.

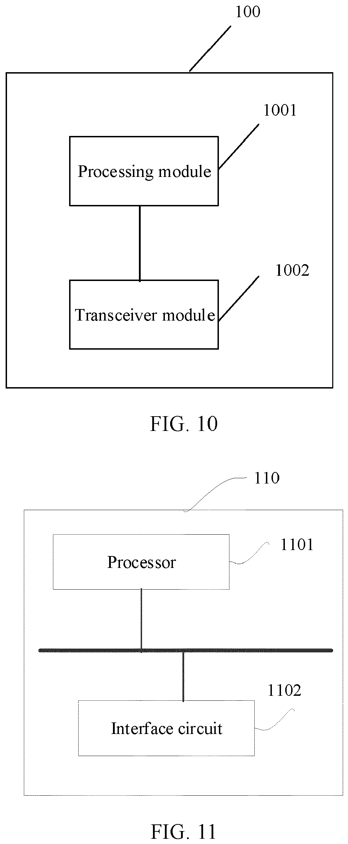

For example, FIG. 10 is a schematic diagram of a possible structure of a key transmission apparatus 100 according to an embodiment of this application, including a processing module 1001 and a transceiver module 1002. The apparatus 100 may be configured to implement a function of the first server, the second server, the first in-vehicle component, the second in-vehicle component, or the like in the foregoing method embodiments, and therefore can also achieve beneficial effects of the foregoing method embodiments. In this embodiment of this application, the apparatus 100 may be the first server, the second server, the first in-vehicle component, or the second in-vehicle component, or may be a module (for example, a chip) in the first server, the second server, the first in-vehicle component, or the second in-vehicle component.

When the apparatus 100 is configured to implement the function of the first in-vehicle component in the method embodiment shown in FIG. 3:
The processing module 1001 is configured to generate a first public-private key pair. The first public-private key pair includes a first public key and a first private key.

The transceiver module 1002 is configured to send first request information to the first server; and receive first response information from the first server. The first request information is used to apply for a second certificate. The first request information includes the first public key and a first certificate. The first request information is signed by using the first certificate. The first certificate is at least used to prove that the first in-vehicle component is qualified to obtain data associated with geographical location information. The first response information includes the second certificate. The second certificate includes the first public key. The second certificate is at least used by the first in-vehicle component to obtain a first key. The first key is at least used to encrypt data containing the geographical location information.

When the apparatus 100 is configured to implement the function of the first server in the method embodiment shown in FIG. 3:
The transceiver module 1002 is configured to receive first request information from the first in-vehicle component. The first request information is used to apply for a second certificate. The first request information includes a first public key and a first certificate. The first request information is signed by using the first certificate. The first certificate is at least used to prove that the first in-vehicle component is qualified to obtain data associated with geographical location information. The processing module 1001 is configured to verify a signature of the first request information by using the first certificate.

The transceiver module 1002 is further configured to: if the verification succeeds, send first response information to the first in-vehicle component. The first response information includes the second certificate. The second certificate includes the first public key. The second certificate is at least used by the first in-vehicle component to obtain a first key. The first key is at least used to encrypt data containing the geographical location information.

For more detailed descriptions of the processing module 1001 and the transceiver module 1002, directly refer to related descriptions in the method embodiment shown in FIG. 3. Details are not described herein again.

When the apparatus 100 is configured to implement the function of the first in-vehicle component in the method embodiment shown in FIG. 8:
The transceiver module 1002 is configured to: when a first condition is met, send a random number to the second in-vehicle component. The first condition includes restarting or waking up the first in-vehicle component.

The processing module 1001 is configured to encrypt the random number by using a first key stored in the first in-vehicle component, to obtain a first ciphertext.

The transceiver module 1002 is further configured to: receive a second ciphertext from the second in-vehicle component, where the second ciphertext is associated with a second key stored in the second in-vehicle component and the random number; and if the first ciphertext is different from the second ciphertext, send a third ciphertext to the second in-vehicle component, where the third ciphertext includes information obtained by encrypting the first key by using a third key, and the first key is at least used to encrypt data containing geographical location information.

When the apparatus 100 is configured to implement the function of the second in-vehicle component in the method embodiment shown in FIG. 8:
The transceiver module 1002 is configured to: receive a random number from the first in-vehicle component; send a second ciphertext to the first in-vehicle component, where the second ciphertext is associated with a second key stored in the second in-vehicle component and the random number; and receive a third ciphertext from the first in-vehicle component, where the third ciphertext includes information obtained by encrypting a first key by using a third key, and the first key is at least used to encrypt data containing geographical location information.

For more detailed descriptions of the processing module 1001 and the transceiver module 1002, directly refer to related descriptions in the method embodiment shown in FIG. 8. Details are not described herein again.

When the apparatus 100 is configured to implement the function of the first in-vehicle component in the method embodiment shown in FIG. 9:
The processing module 1001 is configured to: when a second condition is met, generate a third ciphertext by the first in-vehicle component.

The transceiver module 1002 is configured to send the third ciphertext to the second in-vehicle component. The third ciphertext includes information obtained by encrypting a first key by using a third key. The first key is at least used to encrypt data containing geographical location information. The second condition includes one or more of restarting the first in-vehicle component, waking up the first in-vehicle component, updating a key by the first in-vehicle component, or receiving key request information from the second in-vehicle component by the first in-vehicle component. Key request information is used to request the first in-vehicle component to deliver a key (for example, the key request information is used to request to obtain the first key).

When the apparatus 100 is configured to implement the function of the second in-vehicle component in the method embodiment shown in FIG. 9:
The transceiver module 1002 is configured to: when a third condition is met, send key request information to the first in-vehicle component, where the key request information is used to request the first in-vehicle component to deliver a key (for example, the key request information is used to request to obtain a first key), the first key is at least used to encrypt data containing geographical location information, and the third condition includes one or more of restarting the second in-vehicle component, waking up the second in-vehicle component, or not storing a key in the second in-vehicle component; and receive a third ciphertext from the first in-vehicle component, where the third ciphertext includes information obtained by encrypting the first key by using a third key.

For more detailed descriptions of the processing module 1001 and the transceiver module 1002, directly refer to related descriptions in the method embodiment shown in FIG. 9. Details are not described herein again.

In specific implementation, the apparatus 100 may have a plurality of product forms. The following describes several possible product forms.

With reference to FIG. 11, embodiments of this application provide a key transmission apparatus 110. The apparatus includes at least one processor 1101 and an interface circuit 1102. The interface circuit 1102 is configured to receive code instructions and send the code instructions to the at least one processor 1101. The at least one processor 1101 runs the code instructions to perform the method performed by the first server, the second server, the first in-vehicle component, the second in-vehicle component, or the like in the foregoing method embodiments.

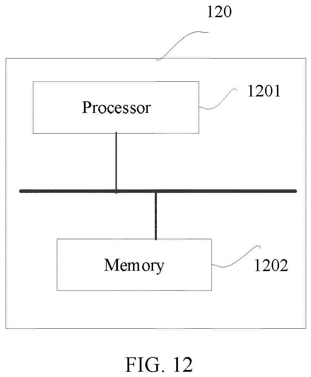

With reference to FIG. 12, embodiments of this application further provide a key transmission apparatus 120, including at least one processor 1201 and at least one memory 1202. The memory 1202 is configured to store computer-executable instructions. The processor 1201 is configured to execute the computer-executable instructions stored in the memory 1202, to enable the apparatus to perform the method performed by the first server, the second server, the first in-vehicle component, the second in-vehicle component, or the like in the foregoing method embodiments. It should be understood that the processor mentioned in embodiments of this application may be implemented through hardware or software. When the processor is implemented through the hardware, the processor may be a logic circuit, an integrated circuit, or the like. When the processor is implemented through the software, the processor may be a general-purpose processor, and is implemented by reading software code stored in the memory.

For example, the processor may be a central processing unit (Central Processing Unit, CPU), another general-purpose processor, a digital signal processor (Digital Signal Processor, DSP), an application-specific integrated circuit (Application Specific Integrated Circuit, ASIC), a field programmable gate array (Field Programmable Gate Array, FPGA), another programmable logic device, a discrete gate, a transistor logic device, a discrete hardware component, or the like. The general-purpose processor may be a microprocessor, or the processor may be any conventional processor or the like.

It should be understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example and not limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor. It should be noted that the memory described in this specification aims to include but is not limited to these memories and any memory of another proper type.

Based on the same technical concept, embodiments of this application further provide a chip. The chip is coupled to a memory, and is configured to read and execute program instructions stored in the memory, to implement the method performed by the first server, the second server, the first in-vehicle component, the second in-vehicle component, or the like in the foregoing method embodiments.

Based on the same technical concept, embodiments of this application further provide an in-vehicle terminal, including the apparatus shown in FIG. 10, FIG. 11, or FIG. 12.

Based on the same technical concept, embodiments of this application further provide a computer-readable storage medium. The computer-readable storage medium is configured to store instructions. When the instructions are executed, the method performed by the first server, the second server, the first in-vehicle component, the second in-vehicle component, or the like in the foregoing method embodiments is implemented.

Based on the same technical concept, embodiments of this application further provide a computer program product including instructions. The computer program product stores the instructions. When the instructions are run on a computer, the computer is enabled to perform the method performed by the first server, the second server, the first in-vehicle component, the second in-vehicle component, or the like in the foregoing method embodiments.

Those skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art may make various modifications and variations to this application without departing from the scope of this application. This application is intended to cover these modifications and variations of this application provided that they fall within the scope of protection defined by the claims of this application and their equivalent technologies.

## Claims

1. A key transmission method, comprising:
when a first condition is met, sending, by a first in-vehicle component, a random number to a second in-vehicle component, wherein the first condition comprises restarting or waking up the first in-vehicle component;
encrypting, by the first in-vehicle component, the random number by using a first key stored in the first in-vehicle component, to obtain a first ciphertext;
receiving, by the first in-vehicle component, a second ciphertext from the second in-vehicle component, wherein the second ciphertext is associated with a second key stored in the second in-vehicle component and the random number; and
if the first ciphertext is different from the second ciphertext, sending, by the first in-vehicle component, a third ciphertext to the second in-vehicle component, wherein the third ciphertext comprises information obtained by encrypting the first key by using a third key, and the first key is at least used to encrypt data containing geographical location information.

2. The method according to claim 1, wherein the first in-vehicle component is an in-vehicle computing platform or an in-vehicle component configured to communicate with an off-vehicle device, and the second in-vehicle component is a cockpit domain component, an autonomous driving domain component, or a chassis power domain component.

3. A key transmission method, comprising:
when a second condition is met, generating, by a first in-vehicle component, a third ciphertext; and
sending, by the first in-vehicle component, the third ciphertext to a second in-vehicle component; wherein
the third ciphertext comprises information obtained by encrypting a first key by using a third key, the first key is at least used to encrypt data containing geographical location information, the second condition comprises one or more of restarting the first in-vehicle component, waking up the first in-vehicle component, updating a key by the first in-vehicle component, or receiving key request information from the second in-vehicle component by the first in-vehicle component, and the key request information is used to request to obtain the first key.

4. The method according to claim 3, wherein the first in-vehicle component is an in-vehicle computing platform or an in-vehicle component configured to communicate with an off-vehicle device, and the second in-vehicle component is a cockpit domain component, an autonomous driving domain component, or a chassis power domain component.

5. A key transmission method, comprising:
when a third condition is met, sending, by a second in-vehicle component, key request information to a first in-vehicle component, wherein the key request information is used to request to obtain a first key, the first key is at least used to encrypt data containing geographical location information, and the third condition comprises one or more of restarting the second in-vehicle component, waking up the second in-vehicle component, or not storing a key in the second in-vehicle component; and
receiving, by the second in-vehicle component, a third ciphertext from the first in-vehicle component, wherein the third ciphertext comprises information obtained by encrypting the first key by using a third key.

6. The method according to claim 5, wherein the first in-vehicle component is an in-vehicle computing platform or an in-vehicle component configured to communicate with an off-vehicle device, and the second in-vehicle component is a cockpit domain component, an autonomous driving domain component, or a chassis power domain component.

7. A key transmission method, comprising:
generating, by a first in-vehicle component, a first public-private key pair, wherein the first public-private key pair comprises a first public key and a first private key;
sending, by the first in-vehicle component, first request information to a first server, wherein the first request information is used to apply for a second certificate, the first request information comprises the first public key and a first certificate, the first request information is signed by using the first certificate, and the first certificate is at least used to prove that the first in-vehicle component is qualified to obtain data associated with geographical location information; and
receiving, by the first in-vehicle component, first response information from the first server, wherein the first response information comprises the second certificate, the second certificate comprises the first public key, the second certificate is at least used by the first in-vehicle component to obtain a first key, and the first key is at least used to encrypt data containing the geographical location information.

8. The method according to claim 7, wherein the sending, by the first in-vehicle component, first request information to a first server comprises:
sending, by the first in-vehicle component, the first request information to the first server through a second server; and
the receiving, by the first in-vehicle component, first response information from the first server comprises:
receiving, by the first in-vehicle component, the first response information from the first server through the second server; wherein
the first server corresponds to a certificate provider, and the second server corresponds to a map provider.

9. The method according to claim 7 or 8, wherein the first response information further comprises a third certificate, and the first response information is signed by using the third certificate; and
the method further comprises:
verifying, by the first in-vehicle component, a signature of the first response information by using the third certificate; and
if the verification succeeds, storing, by the first in-vehicle component, the second certificate; or
if the verification fails, discarding, by the first in-vehicle component, the second certificate.

10. The method according to any one of claims 7 to 9, further comprising:
receiving, by the first in-vehicle component, second response information from the first server, wherein the second response information comprises the first certificate and the third certificate, and the second response information is signed by using the third certificate;
verifying, by the first in-vehicle component, a signature of the second response information by using the third certificate; and
if the verification succeeds, storing, by the first in-vehicle component, the first certificate; or
if the verification fails, discarding, by the first in-vehicle component, the first certificate.

11. A key transmission method, comprising:
receiving, by a first server, first request information from a first in-vehicle component, wherein the first request information is used to apply for a second certificate, the first request information comprises a first public key and a first certificate, the first request information is signed by using the first certificate, and the first certificate is at least used to prove that the first in-vehicle component is qualified to obtain data associated with geographical location information;
verifying, by the first server, a signature of the first request information by using the first certificate; and
if the verification succeeds, sending, by the first server, first response information to the first in-vehicle component, wherein the first response information comprises the second certificate, the second certificate comprises the first public key, the second certificate is at least used by the first in-vehicle component to obtain a first key, and the first key is at least used to encrypt data containing the geographical location information.

12. The method according to claim 11, wherein
the receiving, by a first server, first request information from a first in-vehicle component comprises:
receiving, by the first server, the first request information from the first in-vehicle component through a second server; and
the sending, by the first server, first response information to the first in-vehicle component comprises:
sending, by the first server, the first response information to the first in-vehicle component through the second server; wherein
the first server corresponds to a certificate provider, and the second server corresponds to a map provider.

13. The method according to claim 11 or 12, wherein the first response information further comprises a third certificate, and the method further comprises:
signing, by the first server, the first response information by using the third certificate.

14. The method according to claim 12 or 13, further comprising:
receiving, by the first server, second request information from the second server, wherein the second request information is used to apply for the first certificate, the second request information comprises a second public key and a fourth certificate, the second request information is signed by using the fourth certificate, and the fourth certificate is at least used to prove that the second server is qualified to provide the data associated with the geographical location information;
verifying, by the first server, a signature of the second request information by using the fourth certificate; and
if the verification succeeds, sending, by the first server, second response information to the second server, wherein the second response information comprises the first certificate and the third certificate, the first certificate comprises the second public key, and the second response information is signed by using the third certificate; or
if the verification fails, discarding, by the first server, the second request information.

15. A key transmission method, comprising:
receiving, by a second server, first request information from a first in-vehicle component, wherein the first request information comprises a first public key and a first certificate, the first request information is signed by using the first certificate, and the first certificate is at least used to prove that the first in-vehicle component is qualified to obtain data associated with geographical location information;
verifying, by the second server, a signature of the first request information by using the first certificate;
if the verification succeeds, forwarding, by the second server, the first request information to a first server;
receiving, by the second server, first response information from the first server, wherein the first response information comprises a second certificate, the second certificate comprises the first public key, the second certificate is at least used by the first in-vehicle component to obtain a first key, and the first key is at least used to encrypt data containing the geographical location information; and
sending, by the second server, the first response information to the first in-vehicle component; wherein
the first server corresponds to a certificate provider, and the second server corresponds to a map provider.

16. The method according to claim 15, wherein the first response information further comprises a third certificate, and the first response information is signed by using the third certificate; and
the sending, by the second server, the first response information to the first in-vehicle component comprises:
verifying, by the second server, a signature of the first response information by using the third certificate; and
if the verification succeeds, sending, by the second server, the first response information to the first in-vehicle component.

17. The method according to claim 15 or 16, further comprising:
generating, by the second server, a second public-private key pair, wherein the second public-private key pair comprises a second public key and a second private key;
sending, by the second server, second request information to the first server, wherein the second request information is used to apply for the first certificate, the second request information comprises the second public key and a fourth certificate, the second request information is signed by using the fourth certificate, and the fourth certificate is at least used to prove that the second server is qualified to provide the data associated with the geographical location information;
receiving, by the second server, second response information from the first server, wherein the second response information comprises the first certificate and the third certificate, the first certificate comprises the second public key, and the second response information is signed by using the third certificate;
verifying, by the second server, a signature of the second response information by using the third certificate; and
if the verification succeeds, sending, by the second server, third response information to the first in-vehicle component, wherein the third response information comprises the first certificate and the fourth certificate, the first certificate comprises the second public key, and the third response information is signed by using the fourth certificate; or
if the verification fails, discarding, by the second server, the second response information.

18. A key transmission apparatus, comprising:
a transceiver module, configured to: when a first condition is met, send a random number to a second in-vehicle component, wherein the first condition comprises restarting or waking up a first in-vehicle component in which the apparatus is located; and
a processing module, configured to encrypt the random number by using a first key stored in the first in-vehicle component, to obtain a first ciphertext; wherein
the transceiver unit is further configured to: receive a second ciphertext from the second in-vehicle component, wherein the second ciphertext is associated with a second key stored in the second in-vehicle component and the random number; and if the first ciphertext is different from the second ciphertext, send a third ciphertext to the second in-vehicle component, wherein the third ciphertext comprises information obtained by encrypting the first key by using a third key, and the first key is at least used to encrypt data containing geographical location information.

19. A key transmission apparatus, comprising:
a processing module, configured to: when a second condition is met, generate a third ciphertext; and
a transceiver module, configured to send the third ciphertext to a second in-vehicle component; wherein
the third ciphertext comprises information obtained by encrypting a first key by using a third key, the first key is at least used to encrypt data containing geographical location information, the second condition comprises one or more of restarting a first in-vehicle component in which the apparatus is located, waking up the first in-vehicle component, updating a key by the first in-vehicle component, or receiving key request information from the second in-vehicle component by the first in-vehicle component, and the key request information is used to request to obtain the first key.

20. A key transmission apparatus, comprising:
a transceiver module, configured to: when a third condition is met, send key request information to a first in-vehicle component, wherein the key request information is used to request to obtain a first key, the first key is at least used to encrypt data containing geographical location information, and the third condition comprises one or more of restarting a second in-vehicle component in which the apparatus is located, waking up the second in-vehicle component, or not storing a key in the second in-vehicle component; wherein
the transceiver module is further configured to receive a third ciphertext from the first in-vehicle component, wherein the third ciphertext comprises information obtained by encrypting the first key by using a third key.

21. A key transmission apparatus, comprising:
a processing module, configured to generate a first public-private key pair, wherein the first public-private key pair comprises a first public key and a first private key; and
a transceiver module, configured to send first request information to a first server, wherein the first request information is used to apply for a second certificate, the first request information comprises the first public key and a first certificate, the first request information is signed by using the first certificate, and the first certificate is at least used to prove that a first in-vehicle component in which the apparatus is located is qualified to obtain data associated with geographical location information; wherein
the transceiver module is further configured to receive first response information from the first server, wherein the first response information comprises the second certificate, the second certificate comprises the first public key, the second certificate is at least used by the first in-vehicle component to obtain a first key, and the first key is at least used to encrypt data containing the geographical location information.

22. A key transmission apparatus, comprising:
a transceiver module, configured to receive first request information from a first in-vehicle component, wherein the first request information is used to apply for a second certificate, the first request information comprises a first public key and a first certificate, the first request information is signed by using the first certificate, and the first certificate is at least used to prove that the first in-vehicle component is qualified to obtain data associated with geographical location information; and
a processing module, configured to verify a signature of the first request information by using the first certificate; wherein
the transceiver module is further configured to: if the verification succeeds, send first response information to the first in-vehicle component, wherein the first response information comprises the second certificate, the second certificate comprises the first public key, the second certificate is at least used by the first in-vehicle component to obtain a first key, and the first key is at least used to encrypt data containing the geographical location information.

23. A key transmission apparatus, comprising:
a transceiver module, configured to receive first request information from a first in-vehicle component, wherein the first request information comprises a first public key and a first certificate, the first request information is signed by using the first certificate, and the first certificate is at least used to prove that the first in-vehicle component is qualified to obtain data associated with geographical location information;
a processing module, configured to verify a signature of the first request information by using the first certificate; wherein
the transceiver module is further configured to: if the verification succeeds, forward the first request information to a first server; receive first response information from the first server, wherein the first response information comprises a second certificate, the second certificate comprises the first public key, the second certificate is at least used by the first in-vehicle component to obtain a first key, and the first key is at least used to encrypt data containing the geographical location information; and send the first response information to the first in-vehicle component; and
the first server corresponds to a certificate provider, and a second server in which the apparatus is located corresponds to a map provider.

24. A computer-readable storage medium, wherein the computer-readable storage medium is configured to store instructions, and when the instructions are executed, the method according to claim 1 or 2, claim 3 or 4, claim 5 or 6, any one of claims 7 to 10, any one of claims 11 to 14, or any one of claims 15 to 17 is implemented.

25. A key transmission apparatus, comprising at least one processor and an interface circuit, wherein the interface circuit is configured to receive code instructions and send the code instructions to the at least one processor, and the at least one processor runs the code instructions to perform the method according to claim 1 or 2, claim 3 or 4, claim 5 or 6, any one of claims 7 to 10, any one of claims 11 to 14, or any one of claims 15 to 17.

26. A key transmission apparatus, comprising at least one processor and at least one memory, wherein the memory is configured to store computer-executable instructions, and the processor is configured to execute the computer-executable instructions stored in the memory, to enable the apparatus to perform the method according to claim 1 or 2, claim 3 or 4, claim 5 or 6, any one of claims 7 to 10, any one of claims 11 to 14, or any one of claims 15 to 17.

27. A chip, wherein the chip is coupled to a memory, and is configured to read and execute program instructions stored in the memory, to implement the method according to claim 1 or 2, claim 3 or 4, claim 5 or 6, any one of claims 7 to 10, any one of claims 11 to 14, or any one of claims 15 to 17.

28. An in-vehicle terminal, comprising the apparatus according to any one of claims 18 to 21.

29. A vehicle, comprising the apparatus according to any one of claims 18 to 21.

30. A server, comprising the apparatus according to claim 22 or 23.
